(19) Europäisches Patentamt
European Patent Office
Office européen des brevets

(11) **EP 3 013 010 A1**

(12) **EUROPEAN PATENT APPLICATION**
published in accordance with Art. 153(4) EPC

(43) Date of publication:
**27.04.2016 Bulletin 2016/17**

(51) Int Cl.:
**H04L 27/26** *(2006.01)*

(21) Application number: **13890138.4**

(22) Date of filing: **23.07.2013**

(86) International application number:
**PCT/CN2013/079927**

(87) International publication number:
**WO 2015/010259 (29.01.2015 Gazette 2015/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventor: **ZHANG, Yingyu**
**Shenzhen**
**Guangdong 518129 (CN)**

(74) Representative: **Maiwald Patentanwalts GmbH**
**Elisenhof**
**Elisenstrasse 3**
**80335 München (DE)**

(54) **TRANSMISSION AND RECEPTION METHOD, APPARATUS AND SYSTEM FOR ENHANCED PHYSICAL DOWNLINK CONTROL CHANNEL**

(57) Embodiments of the present invention provide methods for sending and receiving an enhanced physical downlink control channel EPDCCH and an apparatus, relate to the field of communication technologies, and aim to effectively ensure normal communication between a UE and a base station. The sending method includes: determining position information of a physical resource carrying the EPDCCH; and sending the EPDCCH to the UE according to the determined position information of the physical resource carrying the EPDCCH. The present invention can be applied to a Long Term Evolution wireless communications system.

```
┌─────────────────────────────────────────────────────────┐
│ Step 11: Determine position information of physical       │
│          resources carrying an EPDCCH                     │
└─────────────────────────────────────────────────────────┘
                            │
┌─────────────────────────────────────────────────────────┐
│ Step 12: Send the EPDCCH according to the determined      │
│          position information of the physical resources   │
│          carrying the EPDCCH                              │
└─────────────────────────────────────────────────────────┘
```

FIG. 1

**Description**

**TECHNICAL FIELD**

The present invention relates to the field of communication technologies, and in particular, to methods for sending and receiving an enhanced physical downlink control channel EPDCCH (Enhanced Physical Downlink Control Channel), an apparatus, and a system.

**BACKGROUND**

In the 3rd Generation Partnership Project 3GPP (The 3rd Generation Partnership Project) Long Term Evolution LTE (Long Term Evolution) system whose version is Rel.10 (Rel.10) or earlier, a base station notifies a user equipment UE (user equipment) of downlink and uplink scheduling information through a physical downlink control channel PDCCH (Physical Downlink Control Channel). The PDCCH occupies first n symbols of a subframe and is multiplexed with a physical downlink data channel PDSCH (Physical Downlink Shared Channel) in a time division multiplexing manner. The UE demodulates the PDCCH based on a common reference signal CRS (Common Reference Signal).

However, in a 3GPP LTE system whose version is later than Rel.10, as new technologies, such as a multiuser multiple-input multiple-output MIMO (Multiple Input Multiple Output) technology, are introduced, the PDCCH is faced with problems such as interference coordination and channel capacity limitation. Therefore, an EPDCCH is introduced. The EPDCCH and the PDSCH share system bandwidth in a frequency-division multiplexing FDM (Frequency-division multiplexing) manner.

To better meet design requirements of future communications networks, a carrier of a new carrier type NCT (New Carrier Type) is introduced in the 3GPP LTE system whose version is later than Rel.10. For the NCT, the CRS is no longer used to demodulate any physical channel, for example, to demodulate the EPDCCH. The NCT may be designed as a carrier type with complete cell features. In this case, the user equipment UE (User Equipment) needs to clearly know a position of a physical resource of the EPDCCH transmitted on the NCT to receive the EPDCCH, and then establishes, under scheduling of the EPDCCH, a radio resource control RRC (Radio Resource Control) connection and communicates with the base station normally. Otherwise, the UE cannot communicate with the base station normally.

**SUMMARY**

The main objective of embodiments of the present invention is to provide methods for sending and receiving an EPDCCH, an apparatus, and a system, which can effectively ensure normal communication between a UE and a base station.

To achieve the foregoing objective, the embodiments of the present invention use the following technical solutions:

A first aspect of the present invention provides a method for sending an EPDCCH, where the method is applied to an NCT scenario; the sending method includes:

determining position information of a physical resource carrying the EPDCCH;
and
sending the EPDCCH to a UE according to the determined position information of the physical resource carrying the EPDCCH.

In a first possible implementation manner of the first aspect:

the position information of the physical resource carrying the EPDCCH includes a position of a start physical resource block RB (Resource Block) pair of the physical resource carrying the EPDCCH; and
the determining position information of a physical resource carrying the EPDCCH includes:

determining the position of the start physical RB pair of the physical resource carrying the EPDCCH according to pre-setting; or
determining the position of the start physical RB pair of the physical resource carrying the EPDCCH according to a physical-layer cell identity PCI (physical-layer Cell identity); or
determining the position of the start physical RB pair of the physical resource carrying the EPDCCH according to a PCI and time information.

With reference to the first possible implementation manner of the first aspect, in a second possible implementation manner of the first aspect:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the determining position information of a physical resource carrying the EPDCCH includes:

determining the at least one piece of information of the other information according to the pre-setting or the system bandwidth.

In a third possible implementation manner of the first aspect, the determining position information of a physical resource carrying the EPDCCH includes:

determining the position information of the physical resource carrying the EPDCCH according to a physical random access channel PRACH (Physical Random Access Channel) used by the UE to initiate uplink random access;
or,
determining the position information of the physical resource carrying the EPDCCH according to a user identifier of the UE;
or,
determining the position information of the physical resource carrying the EPDCCH according to a random access channel RACH (Random Access Channel) sequence used by the UE to initiate uplink random access.

With reference to the first aspect or any one of the possible implementation manners of the first aspect, in a fourth possible implementation manner of the first aspect, the determining position information of a physical resource carrying the EPDCCH includes:

determining start position information of the physical resource carrying the EPDCCH; and
determining the position information of the physical resource carrying the EPDCCH according to a preset resource frequency hopping mode and the determined start position information.

With reference to the first aspect or any one of the possible implementation manners of the first aspect, in a fifth possible implementation manner of the first aspect, the sending method further includes:

sending, through a public physical channel, configuration information of a physical resource position of the EPDCCH to the UE, where the configuration information indicates a position of the physical resource carrying the EPDCCH or a manner of determining the position of the physical resource carrying the EPDCCH.

With reference to the first aspect or any one implementation manner of the first to the fourth possible implementation manners of the first aspect, in a sixth possible implementation manner of the first aspect, the sending method further includes:

receiving a first random access request from the UE;
sending a first random access response to the UE according to the first random access request, where the first random access response carries configuration information of a position of the physical resource carrying the EPDCCH, and the configuration information indicates the position of the physical resource carrying the EPDCCH.

With reference to the first aspect or any one implementation manner of the first to the fourth possible implementation manners of the first aspect, in a seventh possible implementation manner of the first aspect, the sending method further includes:

receiving a first random access request from the UE;
sending a first random access response to the UE according to the first random access request;
receiving a second random access request from the UE; and

sending a second random access response to the UE according to the second random access request, where the second random access response carries configuration information of a position of the physical resource carrying the EPDCCH, and the configuration information indicates the position of the physical resource carrying the EPDCCH.

With reference to the first aspect or any one implementation manner of the first to the fourth possible implementation manners of the first aspect, in an eighth possible implementation manner of the first aspect, the sending method further includes:

sending a radio resource control RRC reconfiguration instruction to the UE, where the reconfiguration instruction carries configuration information of a position of the physical resource carrying the EPDCCH, and the configuration information indicates the position of the physical resource carrying the EPDCCH.

With reference to the first aspect or any one implementation manner of the possible implementation manners of the first aspect, in a ninth possible implementation manner of the first aspect, the sending method further includes:

sending the configuration information of the determined physical resource position of the EPDCCH to a neighboring cell; and
receiving configuration information of a physical resource position of an EPDCCH of the neighboring cell that is sent by the neighboring cell.

A second aspect of the present invention provides a method for receiving an EPDCCH, where the receiving method includes:

determining position information of a physical resource carrying the EPDCCH;
and
receiving the EPDCCH according to the determined position information of the physical resource carrying the EPDCCH.

In a first possible implementation manner of the second aspect:

the position information of the physical resource carrying the EPDCCH includes a position of a start physical RB pair of the physical resource carrying the EPDCCH; and
the determining position information of a physical resource carrying the EPDCCH includes:

determining the position of the start physical RB pair of the physical resource carrying the EPDCCH according to pre-setting; or
determining the position of the start physical RB pair of the physical resource carrying the EPDCCH according to a physical-layer cell identity PCI; or
determining the position of the start physical RB pair of the physical resource carrying the EPDCCH according to a physical-layer cell identity PCI and time information.

With reference to the first possible implementation manner of the second aspect, in a second possible implementation manner of the second aspect:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the determining position information of a physical resource carrying the EPDCCH includes:

determining the at least one piece of information of the other information according to the pre-setting; or
determining the at least one piece of information of the other information according to the system bandwidth.

In a third possible implementation manner of the second aspect, the determining position information of a physical resource carrying the EPDCCH includes:

determining the position information of the physical resource carrying the EPDCCH according to a physical random access channel PRACH used by uplink random access;
or,
determining the position information of the physical resource carrying the EPDCCH according to a user identifier;
or,
determining the position information of the physical resource carrying the EPDCCH according to a random access channel RACH sequence used by uplink random access.

With reference to the second aspect or any one of the possible implementation manners of the second aspect, in a fourth possible implementation manner of the second aspect, the determining position information of a physical resource carrying the EPDCCH includes:

determining start position information of the physical resource carrying the EPDCCH; and
determining the position information of the physical resource carrying the EPDCCH according to a preset resource frequency hopping mode and the determined start position information.

With reference to the second aspect or any one of the possible implementation manners of the second aspect, in a fifth possible implementation manner of the second aspect, the sending method further includes:

receiving a public physical channel, where the public physical channel carries configuration information of a physical resource position of the EPDCCH, and the configuration information indicates a position of the physical resource carrying the EPDCCH or a manner of determining the position of the physical resource carrying the EPDCCH; and
the determining position information of a physical resource carrying the EPDCCH includes:

determining the position information of the physical resource carrying the EPDCCH according to the configuration information that is of the physical resource position of the EPDCCH and carried in the public physical channel.

With reference to the second aspect or any one implementation manner of the first to the fourth possible implementation manners of the second aspect, in a sixth possible implementation manner of the second aspect, the receiving method further includes:

sending a first random access request; and
receiving a first random access response, where the first random access response carries configuration information of a position of the physical resource carrying the EPDCCH, and the configuration information indicates the position of the physical resource carrying the EPDCCH; and
the determining position information of a physical resource carrying the EPDCCH includes:

determining the position information of the physical resource carrying the EPDCCH according to the configuration information that is of the position of the physical resource carrying the EPDCCH and carried in the first random access response.

With reference to the second aspect or any one implementation manner of the first to the fourth possible implementation manners of the second aspect, in a seventh possible implementation manner of the second aspect, the receiving method further includes:

sending a first random access request;
receiving a first random access response;
sending a second random access request according to the first random access response; and
receiving a second random access response, where the second random access response carries configuration information of a position of the physical resource carrying the EPDCCH, and the configuration information indicates the position of the physical resource carrying the EPDCCH; and
the determining position information of a physical resource carrying the EPDCCH includes:

determining the position information of the physical resource carrying the EPDCCH according to the configuration information that is of the position of the physical resource carrying the EPDCCH and carried in the second random access response.

With reference to the second aspect or any one implementation manner of the first to the fourth possible implementation manners of the second aspect, in an eighth possible implementation manner of the second aspect, the receiving method further includes:

receiving an RRC reconfiguration instruction, where the reconfiguration instruction carries configuration information of a position of the physical resource carrying the EPDCCH, and the configuration information indicates the position of the physical resource carrying the EPDCCH; and
the determining position information of a physical resource carrying the EPDCCH includes:

determining the position information of the physical resource carrying the EPDCCH according to the configuration information that is of the position of the physical resource carrying the EPDCCH and carried in the RRC reconfiguration instruction.

A third aspect of the present invention provides a base station, where the base station includes:

a determining unit, configured to determine position information of a physical resource carrying an EPDCCH which is sent to a UE; and
a sending unit, configured to send the EPDCCH to the UE according to the position information that is of the physical resource carrying the EPDCCH and determined by the determining unit.

In a first possible implementation manner of the third aspect:

the position information of the physical resource carrying the EPDCCH includes a position of a start physical RB pair of the physical resource carrying the EPDCCH; and
the determining unit is specifically configured to:

determine the position of the start physical RB pair of the physical resource carrying the EPDCCH according to pre-setting; or
determine the position of the start physical RB pair of the physical resource carrying the EPDCCH according to a physical-layer cell identity; or
determine the position of the start physical RB pair of the physical resource carrying the EPDCCH according to a physical-layer cell identity and time information.

With reference to the first possible implementation manner of the third aspect, in a second possible implementation manner of the third aspect:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the determining unit is specifically configured to:

determine the at least one piece of information of the other information according to the pre-setting or the system bandwidth.

In a third possible implementation manner of the third aspect, the determining unit is specifically configured to:

determine the position information of the physical resource carrying the EPDCCH according to a physical random access channel PRACH used by the UE to initiate uplink random access;

or,

determine the position information of the physical resource carrying the EPDCCH according to a user identifier of the UE;

or,

determine the position information of the physical resource carrying the EPDCCH according to a random access channel RACH sequence used by the UE to initiate uplink random access.

With reference to the third aspect or any one of the possible implementation manners of the third aspect, in a fourth possible implementation manner of the third aspect, the determining unit is specifically configured to:

determine start position information of the physical resource carrying the EPDCCH; and
determine the position information of the physical resource carrying the EPDCCH according to a preset resource frequency hopping mode and the determined start position information.

With reference to the third aspect or any one of the possible implementation manners of the third aspect, in a fifth possible implementation manner of the third aspect, the sending unit is further configured to:

send, through a public physical channel, configuration information of a physical resource position of the EPDCCH to the UE, where the configuration information indicates a position of the physical resource carrying the EPDCCH or a manner of determining the position of the physical resource carrying the EPDCCH.

With reference to the third aspect or any one implementation manner of the first to the fourth possible implementation manners of the third aspect, in a sixth possible implementation manner of the third aspect:

the base station further includes a receiving unit, where:

the receiving unit is configured to receive a first random access request from the UE; and
the sending unit is further configured to send a first random access response to the UE according to the first random access request received by the receiving unit, where the first random access response carries configuration information of a position of the physical resource carrying the EPDCCH, and the configuration information indicates the position of the physical resource carrying the EPDCCH.

With reference to the third aspect or any one implementation manner of the first to the fourth possible implementation manners of the third aspect, in a seventh possible implementation manner of the third aspect, the base station further includes a receiving unit, where:

the receiving unit is configured to receive a first random access request from the UE;
the sending unit is configured to send a first random access response to the UE according to the first random access request received by the receiving unit;
the receiving unit is further configured to receive a second random access request from the UE; and
the sending unit is further configured to send a second random access response to the UE according to the second random access request, where the second random access response carries configuration information of a position of the physical resource carrying the EPDCCH, and the configuration information indicates the position of the physical resource carrying the EPDCCH.

With reference to the third aspect or any one implementation manner of the first to the fourth possible implementation manners of the third aspect, in an eighth possible implementation manner of the third aspect, the sending unit is further configured to:

send an RRC reconfiguration instruction to the UE, where the reconfiguration instruction carries configuration information of a position of the physical resource carrying the EPDCCH, and the configuration information indicates the position of the physical resource carrying the EPDCCH.

With reference to the third aspect or any one implementation manner of the foregoing possible implementation manners of the third aspect, in a ninth possible implementation manner of the third aspect:

the base station further includes a receiving unit;
the sending unit is further configured to send the position information that is of the physical resource of the EPDCCH and determined by the determining unit to a neighboring cell; and
the receiving unit is further configured to receive position information of a physical resource of an EPDCCH of the neighboring cell that is sent by the neighboring cell.

A fourth aspect of the present invention provides a UE, where the UE includes:

a determining unit, configured to determine position information of a physical resource carrying an EPDCCH; and a receiving unit, configured to receive the EPDCCH according to the position information that is of the physical resource carrying the EPDCCH and determined by the determining unit.

In a first possible implementation manner of the fourth aspect:

the position information of the physical resource carrying the EPDCCH includes a position of a start physical RB pair of the physical resource carrying the EPDCCH; and
the determining unit is specifically configured to:

determine the position of the start physical RB pair of the physical resource carrying the EPDCCH according to pre-setting;
or,
determine the position of the start physical RB pair of the physical resource carrying the EPDCCH according to a physical-layer cell identity;
or,
determine the position of the start physical RB pair of the physical resource carrying the EPDCCH according to a physical-layer cell identity and time information.

With reference to the first possible implementation manner of the fourth aspect, in a second possible implementation manner of the fourth aspect:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH and;
the determining unit is specifically configured to:

determine the at least one piece of information of the other information according to the pre-setting;
or,
determine the at least one piece of information of the other information according to the system bandwidth.

In a third possible implementation manner of the fourth aspect, the determining unit is specifically configured to:

determine the position information of the physical resource carrying the EPDCCH according to a physical random access channel PRACH used by uplink random access;
or,
determine the position information of the physical resource carrying the EPDCCH according to a user identifier;
or,
determine the position information of the physical resource carrying the EPDCCH according to a random access channel RACH sequence used by uplink random access.

With reference to the fourth aspect or any one of the possible implementation manners of the fourth aspect, in a fourth possible implementation manner of the fourth aspect, the determining unit is specifically configured to:

determine start position information of the physical resource carrying the EPDCCH; and
determine the position information of the physical resource carrying the EPDCCH according to a preset resource frequency hopping mode and the determined start position information.

With reference to the fourth aspect or any one of the possible implementation manners of the fourth aspect, in a fifth possible implementation manner of the fourth aspect:

the receiving unit is further configured to:

receive a public physical channel, where the public physical channel carries configuration information of a physical resource position of the EPDCCH, and the configuration information indicates a position of the physical resource carrying the EPDCCH or a manner of determining the position of the physical resource carrying the EPDCCH; and
the determining unit is specifically configured to:

determine the position information of the physical resource carrying the EPDCCH according to the configuration information that is of the physical resource position of the EPDCCH and carried in the public physical channel received by the receiving unit.

With reference to the fourth aspect or any one implementation manner of the first to the fourth possible implementation manners of the fourth aspect, in a sixth possible implementation manner of the fourth aspect, the UE further includes a sending unit, where:

the sending unit is configured to send a first random access request;
the receiving unit is further configured to receive a first random access response, where the first random access response carries configuration information of a position of the physical resource carrying the EPDCCH, and the configuration information indicates the position of the physical resource carrying the EPDCCH; and
the determining unit is specifically configured to:

determine the position information of the physical resource carrying the EPDCCH according to the configuration information that is of the position of the physical resource carrying the EPDCCH and carried in the first random access response received by the receiving unit.

With reference to the fourth aspect or any one implementation manner of the first to the fourth possible implementation manners of the fourth aspect, in a seventh possible implementation manner of the fourth aspect, the UE further includes a sending unit, where:

the sending unit is configured to send a first random access request;
the receiving unit is further configured to receive a first random access response;
the sending unit is further configured to send a second random access request according to the first random access response;
the receiving unit is further configured to receive a second random access response, where the second random access response carries configuration information of a position of the physical resource carrying the EPDCCH, and the configuration information indicates the position of the physical resource carrying the EPDCCH; and
the determining unit is specifically configured to:

determine the position information of the physical resource carrying the EPDCCH according to the configuration information that is of the position of the physical resource carrying the EPDCCH and carried in the second random access response.

With reference to the fourth aspect or any one implementation manner of the first to the fourth possible implementation manners of the fourth aspect, in an eighth possible implementation manner of the fourth aspect:

the receiving unit is further configured to:

receive an RRC reconfiguration instruction, where the reconfiguration instruction carries configuration information of a position of the physical resource carrying the EPDCCH, and the configuration information indicates the position of the physical resource carrying the EPDCCH; and
the determining unit is specifically configured to:

determine the position information of the physical resource carrying the EPDCCH according to the configuration information that is of the position of the physical resource carrying the EPDCCH and carried in the RRC reconfiguration instruction received by the receiving unit.

A fifth aspect of the present invention provides a base station, including:

a processor, a memory, a communication interface, and a bus, where:

the processor, the memory, and the communication interface are connected and implement mutual communication by using the bus;
the memory stores executable program code; and
the processor runs a program corresponding to the executable program code by reading the executable program code stored in the memory and is configured to:

determine position information of a physical resource carrying an EPDCCH which is sent to a UE; and

send the EPDCCH to the UE according to the determined position information of the physical resource carrying the EPDCCH.

In a first possible implementation manner of the fifth aspect:

the position information of the physical resource carrying the EPDCCH includes a position of a start physical RB pair of the physical resource carrying the EPDCCH; and
the processor is configured to:

determine the position of the start physical RB pair of the physical resource carrying the EPDCCH according to pre-setting;
or,
determine the position of the start physical RB pair of the physical resource carrying the EPDCCH according to a physical-layer cell identity;
or,
determine the position of the start physical RB pair of the physical resource carrying the EPDCCH according to a physical-layer cell identity and time information.

With reference to the first possible implementation manner of the fifth aspect, in a second possible implementation manner of the fifth aspect:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the processor is configured to:

determine the at least one piece of information of the other information according to the pre-setting or the system bandwidth.

In a third possible implementation manner of the fifth aspect, the processor is configured to:

determine the position information of the physical resource carrying the EPDCCH according to a physical random access channel PRACH used by the UE to initiate uplink random access;
or,
determine the position information of the physical resource carrying the EPDCCH according to a user identifier of the UE;
or,
determine the position information of the physical resource carrying the EPDCCH according to a random access channel RACH sequence used by the UE to initiate uplink random access.

With reference to the fifth aspect or any one of the possible implementation manners of the fifth aspect, in a fourth possible implementation manner of the fifth aspect, the processor is configured to:

determine start position information of the physical resource carrying the EPDCCH; and
determine the position information of the physical resource carrying the EPDCCH according to a preset resource frequency hopping mode and the determined start position information.

With reference to the fifth aspect or any one of the possible implementation manners of the fifth aspect, in a fifth possible implementation manner of the fifth aspect, the processor is configured to:

send, through a public physical channel, configuration information of a physical resource position of the EPDCCH to the UE, where the configuration information indicates a position of the physical resource carrying the EPDCCH or a manner of determining the position of the physical resource carrying the EPDCCH.

With reference to the fifth aspect or any one implementation manner of the first to the fourth possible implementation manners of the fifth aspect, in a sixth possible implementation manner of the fifth aspect:

the processor is configured to:

receive a first random access request from the UE;
send a first random access response to the UE according to the received first random access request, where the first random access response carries configuration information of a position of the physical resource carrying the EPDCCH, and the configuration information indicates the position of the physical resource carrying the EPDCCH.

With reference to the fifth aspect or any one implementation manner of the first to the fourth possible implementation manners of the fifth aspect, in a sixth possible implementation manner of the fifth aspect, the processor is configured to:

receive a first random access request from the UE;
send a first random access response to the UE according to the received first random access request;
receive a second random access request from the UE; and
send a second random access response to the UE according to the second random access request, where the second random access response carries configuration information of a position of the physical resource carrying the EPDCCH, and the configuration information indicates the position of the physical resource carrying the EPDCCH.

With reference to the fifth aspect or any one implementation manner of the first to the fourth possible implementation manners of the fifth aspect, in an eighth possible implementation manner of the fifth aspect, the processor is configured to:

send an RRC reconfiguration instruction to the UE, where the reconfiguration instruction carries configuration information of a position of the physical resource carrying the EPDCCH, and the configuration information indicates the position of the physical resource carrying the EPDCCH.

With reference to the fifth aspect or any one implementation manner of the possible implementation manners of the fifth aspect, in a ninth possible implementation manner of the fifth aspect, the processor is configured to:

send the determined position information of the physical resource of the EPDCCH to a neighboring cell; and
receive position information of a physical resource of an EPDCCH of the neighboring cell that is sent by the neighboring cell.

A sixth aspect of the present invention provides a UE, where the UE includes:

a processor, a memory, a communication interface, and a bus, where:

the processor, the memory, and the communication interface are connected and implement mutual communication by using the bus;
the memory stores executable program code; and
the processor runs a program corresponding to the executable program code by reading the executable program code stored in the memory and is configured to:

determine position information of a physical resource carrying an EPDCCH; and
receive the EPDCCH according to the determined position information of the physical resource carrying the EPDCCH.

In a first possible implementation manner of the sixth aspect:

the position information of the physical resource carrying the EPDCCH includes a position of a start physical RB pair of the physical resource carrying the EPDCCH; and
the processor is configured to:

determine the position of the start physical RB pair of the physical resource carrying the EPDCCH according to pre-setting;
or,
determine the position of the start physical RB pair of the physical resource carrying the EPDCCH according to a physical-layer cell identity;
or,
determine the position of the start physical RB pair of the physical resource carrying the EPDCCH according to a physical-layer cell identity and time information.

With reference to the first possible implementation manner of the sixth aspect, in a second possible implementation manner of the sixth aspect:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the processor is configured to:

determine the at least one piece of information of the other information according to the pre-setting;
or,
determine the at least one piece of information of the other information according to the system bandwidth.

In a third possible implementation manner of the sixth aspect, the processor is configured to:

determine the position information of the physical resource carrying the EPDCCH according to a physical random access channel PRACH used by uplink random access;
or,
determine the position information of the physical resource carrying the EPDCCH according to a user identifier;
or,
determine the position information of the physical resource carrying the EPDCCH according to a random access channel RACH sequence used by uplink random access.

With reference to the sixth aspect or any one of the possible implementation manners of the sixth aspect, in a fourth possible implementation manner of the sixth aspect, the processor is configured to:

determine start position information of the physical resource carrying the EPDCCH; and
determine the position information of the physical resource carrying the EPDCCH according to a preset resource frequency hopping mode and the determined start position information.

With reference to the sixth aspect or any one of the possible implementation manners of the sixth aspect, in a fifth possible implementation manner of the sixth aspect:

the processor is configured to:

receive a public physical channel, where the public physical channel carries configuration information of a physical resource position of the EPDCCH, and the configuration information indicates a position of the physical resource carrying the EPDCCH or a manner of determining the position of the physical resource carrying the EPDCCH; and

determine the position information of the physical resource carrying the EPDCCH according to the configuration information that is of the physical resource position of the EPDCCH and carried in the received public physical channel.

With reference to the sixth aspect or any one implementation manner of the first to the fourth possible implementation manners of the sixth aspect, in a sixth possible implementation manner of the sixth aspect, the processor is configured to:

send a first random access request;

receive a first random access response, where the first random access response carries configuration information of a position of the physical resource carrying the EPDCCH, and the configuration information indicates the position of the physical resource carrying the EPDCCH; and

determine the position information of the physical resource carrying the EPDCCH according to the configuration information that is of the position of the physical resource carrying the EPDCCH and carried in the received first random access response.

With reference to the sixth aspect or any one implementation manner of the first to the fourth possible implementation manners of the sixth aspect, in a seventh possible implementation manner of the sixth aspect, the processor is configured to:

send a first random access request;

receive a first random access response;

send a second random access request according to the first random access response;

receive a second random access response, where the second random access response carries configuration information of a position of the physical resource carrying the EPDCCH, and the configuration information indicates the position of the physical resource carrying the EPDCCH; and

determine the position information of the physical resource carrying the EPDCCH according to the configuration information that is of the position of the physical resource carrying the EPDCCH and carried in the second random access response.

With reference to the sixth aspect or any one implementation manner of the first to the fourth possible implementation manners of the sixth aspect, in an eighth possible implementation manner of the sixth aspect, the processor is configured to:

receive an RRC reconfiguration instruction, where the reconfiguration instruction carries configuration information of a position of the physical resource carrying the EPDCCH, and the configuration information indicates the position of the physical resource carrying the EPDCCH; and

determine the position information of the physical resource carrying the EPDCCH according to the configuration information that is of the position of the physical resource carrying the EPDCCH and carried in the received RRC reconfiguration instruction.

A seventh aspect of the present invention provides a communications system, including:

a base station and at least one user equipment, where:

the base station is configured to determine position information of a physical resource carrying a physical downlink control channel EPDCCH which is sent to the user equipment, and send the EPDCCH to the user equipment according to the determined position information of the physical resource carrying the EPDCCH; and the user equipment is configured to determine the position information of the physical resource carrying the EPDCCH which is sent by the base station, and receive the EPDCCH according to the determined position information of the physical resource carrying the EPDCCH.

In a first possible implementation manner of the seventh aspect:

the position information of the physical resource carrying the EPDCCH includes a position of a start physical resource block (RB) pair of the physical resource carrying the EPDCCH; and
the base station and the user equipment determine the position of the start physical RB pair of the physical resource carrying the EPDCCH according to pre-setting;
or,
the base station and the user equipment determine the position of the start physical RB pair of the physical resource carrying the EPDCCH according to a physical-layer cell identity;
or,
the base station and the user equipment determine the position of the start physical RB pair of the physical resource carrying the EPDCCH according to a physical-layer cell identity and time information.

In a second possible implementation manner of the seventh aspect:

the base station and the user equipment determine the position information of the physical resource carrying the EPDCCH according to a physical random access channel PRACH used by the user equipment to initiate uplink random access;
or,
the base station and the user equipment determine the position information of the physical resource carrying the EPDCCH according to a user identifier of the user equipment;
or,
the base station and the user equipment determine the position information of the physical resource carrying the EPDCCH according to a random access channel RACH sequence used by the user equipment to initiate uplink random access.

With reference to the seventh aspect or any one of the possible implementation manners of the seventh aspect, in a third possible implementation manner of the seventh aspect:

when the base station and the user equipment determine the position information of the physical resource carrying the EPDCCH, the base station and the user equipment first determine start position information of the physical resource carrying the EPDCCH, and then determine the position information of the physical resource carrying the EPDCCH according to a preset resource frequency hopping mode and the determined start position information.

With reference to the seventh aspect or any one of the possible implementation manners of the seventh aspect, in a fourth possible implementation manner of the seventh aspect:

the base station sends, through a public physical channel, configuration information of a physical resource position of the EPDCCH to the user equipment, where the configuration information indicates a position of the physical resource carrying the EPDCCH or a manner of determining the position of the physical resource carrying the EPDCCH; and
the user equipment receives the public physical channel, and determines the position information of the physical resource carrying the EPDCCH according to the configuration information that is of the physical resource position of the EPDCCH and carried in the public physical channel.

With reference to the seventh aspect or the first to the third implementation manners of the seventh aspect, in a fifth possible implementation manner of the seventh aspect:

the user equipment sends a first random access request to the base station;
the base station receives the first random access request, and sends a first random access response to the user equipment according to the first random access request, where the first random access response carries configuration information of a position of the physical resource carrying the EPDCCH, and the configuration information indicates the position of the physical resource carrying the EPDCCH; and
the user equipment receives the first random access response, and determines the position information of the physical resource carrying the EPDCCH according to the configuration information that is of the position of the physical resource carrying the EPDCCH and carried in the first random access response.

With reference to the seventh aspect or the first to the third implementation manners of the seventh aspect, in a sixth possible implementation manner of the seventh aspect:

the user equipment sends a first random access request to the base station;
the base station receives the first random access request, and sends a first random access response to the user equipment according to the first random access request;
the user equipment sends a second random access request according to the first random access response;
the base station receives the second random access request, and sends a second random access response to the user equipment according to the second random access request, where the second random access response carries configuration information of a position of the physical resource carrying the EPDCCH, and the configuration information indicates the position of the physical resource carrying the EPDCCH; and
the user equipment receives the second random access response, and determines the position information of the physical resource carrying the EPDCCH according to the configuration information that is of the position of the physical resource carrying the EPDCCH and carried in the second random access response.

With reference to the seventh aspect or the first to the third implementation manners of the seventh aspect, in a seventh possible implementation manner of the seventh aspect:

the base station sends a radio resource control (RRC) reconfiguration instruction to the user equipment, where the reconfiguration instruction carries configuration information of a position of the physical resource carrying the EPDCCH, and the configuration information indicates the position of the physical resource carrying the EPDCCH; and
the user equipment receives the RRC reconfiguration instruction, and determines the position information of the physical resource carrying the EPDCCH according to the configuration information that is of the position of the physical resource carrying the EPDCCH and carried in the RRC reconfiguration instruction.

For the methods for sending and receiving an EPDCCH, the base station, the UE, and the system according to the embodiments of the present invention, the UE may clearly know an EPDCCH and a physical resource position of the EPDCCH in an NCT scenario, and further obtain scheduling information needed for communication between the UE and the base station by using the NCT, thereby effectively ensuring normal communication between the UE and the base station.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a flowchart of a method for sending an EPDCCH according to an embodiment of the present invention;
FIG. 2 is a schematic diagram of an EPDCCH distribution manner according to an embodiment of the present invention;
FIG. 3 is another schematic diagram of an EPDCCH distribution manner according to an embodiment of the present invention;
FIG. 4 is an exemplary schematic diagram of several pre-defined optional positions of an EPDCCH resource according to an embodiment of the present invention;
FIG. 5 is an exemplary schematic diagram of several pre-defined optional positions of an EPDCCH resource according to an embodiment of the present invention;
FIG. 6 is an exemplary schematic diagram of a correspondence between an EPDCCH resource and a user group according to an embodiment of the present invention;
FIG. 7 is an exemplary schematic diagram of a correspondence between an EPDCCH resource and a user group according to an embodiment of the present invention;
FIG. 8 is schematic diagram of a random access process of a UE;
FIG. 9 is a schematic format diagram of an Msg2 according to an embodiment of the present invention;
FIG. 10 is a flowchart of a method for receiving an EPDCCH according to an embodiment of the present invention;
FIG. 11 is a structural block diagram of a base station according to an embodiment of the present invention;
FIG. 12 is a structural block diagram of a base station according to an embodiment of the present invention;
FIG. 13 is a structural block diagram of a UE according to an embodiment of the present invention;
FIG. 14 is a structural block diagram of a UE according to an embodiment of the present invention;
FIG. 15 is a schematic structural diagram of a base station according to an embodiment of the present invention;

FIG. 16 is a schematic structural diagram of a base station according to an embodiment of the present invention; and FIG. 17 is a schematic diagram of an application scenario of methods for sending and receiving an EPDCCH according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The embodiments of the present invention provide methods for sending and receiving an EPDCCH, which are applicable to an NCT scenario with complete cell features (that is, system information is provided for a user, the user is allowed to initiate an access, a radio connection is established, and the like).

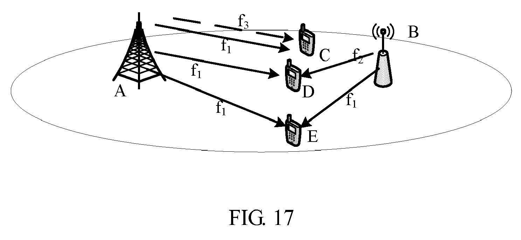

For example, the methods provided by the present invention may be applied to the following scenario: As shown in FIG. 17, A and B represent two base stations.

A user C communicates with the base station A on two carriers whose center frequencies are $f_1$ and $f_3$. At least one of the two carriers has complete cell features.

A user D communicates with the base station A and the base station B separately on two carriers whose center frequencies are $f_1$ and $f_2$. At least one of the two carriers has complete cell features.

A user E communicates with the base station A and the base station B separately on carriers whose center frequencies are $f_1$. At least one of the carriers on which A and B work has complete cell features.

No matter whether a carrier on which a user communicates with a given base station has complete cell features, the methods for sending and receiving an EPDCCH provided by the present invention may always be used. Definitely, the methods may also be applicable to other scenarios, which are not limited in the present invention.

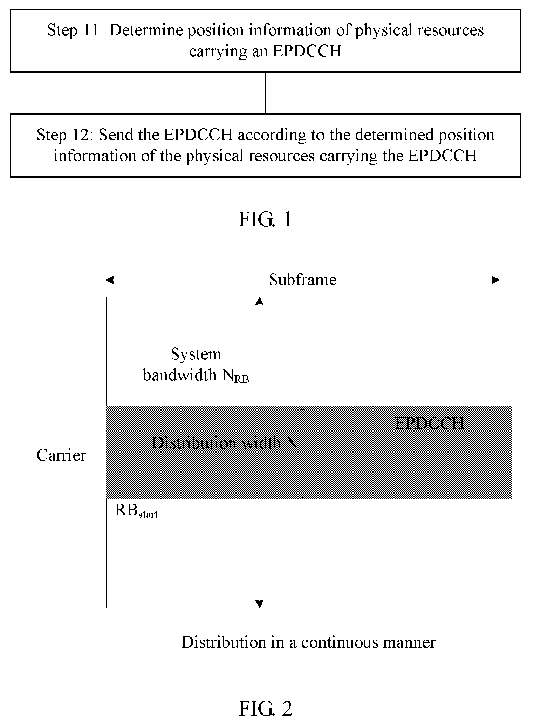

An embodiment of the present invention provides a method for sending an EPDCCH. The following describes the method by using an example in which the method is executed by a base station. Definitely, the method may also be executed by a user equipment which is applied to communication between user equipments. As shown in FIG. 1, the method includes the following steps:

Step 11: Determine position information of physical resources carrying an EPDCCH.

In this step, the base station needs to determine a specific physical position of the EPDCCH in system bandwidth resources, so as to carry the EPDCCH in the physical resources and sends the EPDCCH to a UE.

Specifically, in this embodiment of the present invention, the physical resources carrying the EPDCCH may have two distribution manners: a continuous manner and a distributed manner.

That the physical resources carrying the EPDCCH are several physical resource block pairs (PRB Pair, RB pair for short) is used as an example, when the distribution manner of the physical resources carrying the EPDCCH is the continuous manner, as shown in FIG. 2, bandwidth of a current system is $N_{RB}$, the physical resources carrying the EPDCCH occupy several RB pairs successively in the system bandwidth, that is, the physical resources carrying the EPDCCH occupy one subband in the system bandwidth $N_{RB}$. In this case, positions of the physical resources carrying the EPDCCH may be represented jointly by a position $RB_{start}$ of a start physical RB pair of the physical resources carrying the EPDCCH and a distribution width N of the physical resources carrying the EPDCCH in the system bandwidth, where N refers to an RB pair span defined by two RB pairs with a maximum frequency domain interval in all the RB pairs carrying the EPDCCH. Because the EPDCCH is distributed continuously, the distribution bandwidth N of the physical resources carrying the EPDCCH in the system bandwidth is the same as the number M of RB pairs actually used by the physical resources carrying the EPDCCH.

That is, when the distribution manner of the physical resources carrying the EPDCCH is the continuous manner, in this step, the position $RB_{start}$ of the start physical RB pair of the physical resources carrying the EPDCCH and the distribution width N of the physical resources carrying the EPDCCH in the system bandwidth may be determined.

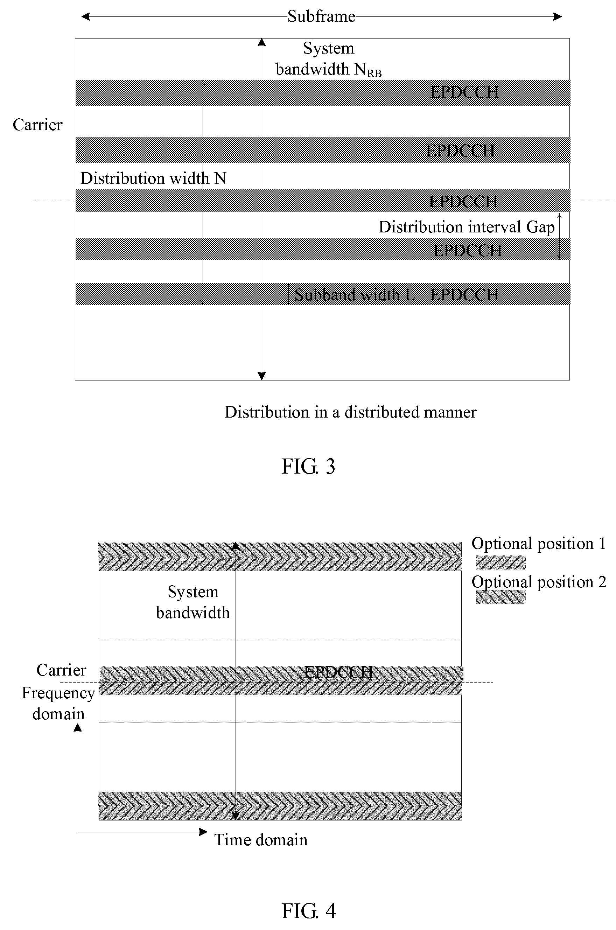

When the distribution manner of the physical resources carrying the EPDCCH is the distributed manner, as shown in FIG. 3, the physical resources carrying the EPDCCH occupy u subbands in the system bandwidth $N_{RB}$, where the u subbands are distributed in resources defined by the distribution bandwidth N; a distribution interval between neighboring subbands is Gap; a subband width of each subband, that is, the number of RB pairs successively occupied by each subband, is L, and the number of RB pairs actually used by the physical resources carrying the EPDCCH is M = u x L. Because the distribution manner of the physical resources carrying the EPDCCH is the distribution manner, the distribution width N is different from the number M of actually used RB pairs, and N is greater than M. In this case, the positions of the physical resources carrying the EPDCCH may be represented jointly by multiple combinations of the position $RB_{start}$ of the start physical RB pair of the physical resources carrying the EPDCCH and several parameters such as the distribution width N, the distribution interval Gap, the number u of subbands, the subband width L, and the number of actually used RB pairs.

That is, when the distribution manner of the physical resources carrying the EPDCCH is the distributed manner, in this step, the position $RB_{start}$ of the start physical RB pair of the physical resources carrying the EPDCCH and other parameters, for example, the distribution width N, the distribution interval Gap, the number u of subbands, and the subband width L, may be determined.

No matter whether the distribution manner of the physical resources carrying the EPDCCH is the distributed manner or the continuous manner, in this step, the base station always needs to determine the position $RB_{start}$ of the start physical RB pair of the physical resources carrying the EPDCCH. In this embodiment of the present invention, optionally, the base station may determine the $RB_{start}$ by using any one of the following three manners:

Manner 1: The base station determines the $RB_{start}$ according to pre-setting.

Optionally, the $RB_{start}$ may be preset as a fixed value, where the fixed value is known by both the UE and the base station. In this way, the base station knows the $RB_{start}$ according to the pre-setting, and the UE also knows the $RB_{start}$ according to the pre-setting and further knows the positions of the physical resources carrying the EPDCCH, so that the UE may receive the EPDCCH successfully, thereby effectively ensuring normal communication between the UE and the base station. For example, the physical resources carrying the EPDCCH may be preset to be distributed symmetrically around a center of a carrier and the start position is as follows:

$$RB_{start} = \frac{N_{RB} - N}{2}$$

where $N_{RB}$ represents the system bandwidth and N represents the distribution width of the physical resources carrying the EPDCCH in the system bandwidth.

Optionally, the physical resources carrying the EPDCCH may also be limited in advance within a spectrum range whose transmission bandwidth is $N_{rRB}$. Specifically, the $RB_{start}$ may be limited within the spectrum range of the $N_{rRB}$ by using a deterministic function F, where the spectrum range and the function F are known by both the UE and the base station. In this way, the base station knows the $RB_{start}$ according to the pre-setting, and the UE also knows the $RB_{start}$ according to the pre-setting and further knows the positions of the physical resources carrying the EPDCCH, so that the UE may receive the EPDCCH successfully, thereby effectively ensuring normal communication between the UE and the base station. For example, the physical resources carrying the EPDCCH are limited in advance within the bandwidth $N_{rRB}$ which is symmetrical with the center of the carrier, which is specifically as follows:

$$\left[ \frac{N_{RB} - N_{rRB}}{2}, \frac{N_{RB} + N_{rRB}}{2} \right]$$

In this case, F may be set to:

$$RB_{start} = F(N_{rRB}) = \frac{N_{RB} - N_{rRB}}{2}$$

Manner 2: The base station determines the $RB_{start}$ according to a physical cell identity PCI (Physical Cell Identity).

In this manner, the $RB_{start}$ depends on the PCI, that is, the $RB_{start}$ may be a function of the PCI:

$$RB_{start} = f(PCI)$$

where f () may be a deterministic function, and output of f () is a positive integer type. A specific example is as follows:

$$RB_{start} = PCI \bmod X$$

where a value of X may be $N_{RB}$.

Optionally, in this manner, the physical resources carrying the EPDCCH may also be limited within a spectrum range whose transmission bandwidth is $N_{rRB}$. This limitation manner is implemented by using a deterministic function F (). For example, assume that the physical resources carrying the EPDCCH are limited within the bandwidth $N_{rRB}$ which is symmetrical with a center of a carrier, which is specifically as follows:

$$\left[ \frac{N_{RB} - N_{rRB}}{2}, \frac{N_{RB} + N_{rRB}}{2} \right]$$

In this case, the function F may be set to:

$$RB_{start} = F(PCL) = PCL \bmod Y + \frac{N_{RB} - N_{rRB}}{2}$$

where a value of Y may be the $N_{rRB}$ or the distribution interval Gap.

In this manner, for the UE, the UE can obtain the PCI according to a synchronization channel, determine the $RB_{start}$ according to the PCI and further know the positions of the physical resources carrying the EPDCCH, so that the UE may receive the EPDCCH successfully, thereby effectively ensuring normal communication between the UE and the base station.

Manner 3: The base station may determine the $RB_{start}$ according to a PCI and time information.

In this manner, the $RB_{start}$ depends on the PCI and the time information T.

In an embodiment of the present invention, in a single system subframe, the $RB_{start}$ remains unchanged, that is, the $RB_{start}$ may be a function of the PCI and the time information T:

$$RB_{start} = f(PCL, T)$$

where a value of the time information T may be a system frame number SFN (system Frame Number) or a subframe number sfn (subframe number), f is a deterministic or random function, and output of f is a positive integer type.

For example, if f is a deterministic function, a specific form may be as follows:

$$RB_{start} = (PCI + SFN) \bmod X ,$$

or

$$RB_{start} = (PCI + sfn) \bmod X$$

where a value of X may be the $N_{RB}$ or the distribution interval Gap.

If f() is a random function, a specific form may be as follows:

$$RB_{start} = c(T) \bmod X$$

where c is a random sequence and the PCI is an initialized parameter of the sequence, a sequence c (i) may be obtained according to a manner of generating a Gold sequence in section 7.2 of the 3GPP 36.211 and the initialized parameter is $c_{init}$=PCI.

Optionally, in this manner, the physical resources carrying the EPDCCH may also be limited within a spectrum range whose transmission bandwidth is $N_{rRB}$. This limitation manner is implemented by using a deterministic function or random function F (). For example, assume that the physical resources carrying the EPDCCH are limited within the bandwidth $N_{rRB}$ which is symmetrical with a center of a carrier, which is specifically as follows:

$$\left[\frac{N_{RB} - N_{rRB}}{2}, \frac{N_{RB} + N_{rRB}}{2}\right]$$

If F() is a deterministic function, a specific form may be as follows:

$$RB_{start} = F(PCI,T) = (PCI + SFN) \bmod Y + \frac{N_{RB} - N_{rRB}}{2},$$

or,

$$RB_{start} = F(PCI,T) = (PCI + sfn) \bmod Y + \frac{N_{RB} - N_{rRB}}{2}$$

If F () is a random function, a specific form may be as follows:

$$RB_{start} = c(T) \bmod Y + \frac{N_{RB} - N_{rRB}}{2}$$

where a value of Y may be the $N_{rRS}$ or the distribution interval Gap.

In this manner, for the UE, the UE can obtain the PCI according to a synchronization channel, and can obtain the time information according to a broadcast channel. Therefore, the UE can determine the RB$_{start}$ according to the PCI and the time information and further know the positions of the physical resources carrying the EPDCCH, so that the UE may receive the EPDCCH successfully, thereby effectively ensuring normal communication between the UE and the base station.

The foregoing describes three manners of determining the RB$_{start}$ by the base station. It may be understood that: the foregoing three manners are only examples; in other embodiments of the present invention, the base station may determine the RB$_{start}$ by using a manner different from the foregoing three manners, which is not limited in the present invention.

To clearly know specific positions of the physical resources carrying the EPDCCH, the base station also needs to determine other position information besides the RB$_{start}$, for example, one or more of the information mentioned above: the distribution width N of the physical resources carrying the EPDCCH in the system bandwidth, the number u of subbands, the number L of RB pairs occupied successively by each subband, and the number M of actually used RB pairs. The base station may determine any one piece of the information by using any one of the following manners:

Manner 1: The information is preset as a fixed value, and the base station determines one piece of the information according to the preset fixed value. For the UE, the fixed value is already known. Therefore, the UE may know the information and further know the positions of the physical resources carrying the EPDCCH, so that the UE may receive the EPDCCH successfully, thereby effectively ensuring normal communication between the UE and the base station.

Manner 2: A mapping relationship between the information and the system bandwidth is established, and the base station determines one piece of the information according to the system bandwidth. For the UE, the system bandwidth may be obtained from a broadcast channel PBCH. Therefore, the UE may know the information and further know the positions of the physical resources carrying the EPDCCH, so that the UE may receive the EPDCCH successfully, thereby effectively ensuring normal communication between the UE and the base station.

Using the number u of subbands as an example, a mapping relationship between a value of u and a size of the system bandwidth may be set as follows:

| System bandwidth | 1.4M | 3M | 5M | 10M | 15M | 20M |
|---|---|---|---|---|---|---|
| u | 1 | 1 | 1 | 2 | 3 | 4 |

In this case, when the base station needs to determine the number u of subbands of the physical resources carrying the EPDCCH, the base station may determine the number u of subbands according to the system bandwidth and the mapping relationship between the system bandwidth and u.

It should be emphasized that the foregoing manners of determining the parameters representing the positions of the physical resources carrying the EPDCCH are only examples and do not make any limitation on the present invention.

It may be understood that: in this step, the base station may not only use the foregoing manners in which the parameters representing the positions of the physical resources carrying the EPDCCH are determined one by one to determine the positions of the physical resources, but also may use another manner to determine the positions of the physical resources carrying the EPDCCH.

It should be noted that: in the foregoing manners of determining the position information of the physical resources carrying the EPDCCH by the base station, no matter whether the base station determines the position information of the physical resources carrying the EPDCCH according to the pre-setting or according to at least one of the PCI and the time information, the UE may know the pre-setting, the PCI, and the time information. Therefore, if the base station determines the positions of the physical resources carrying the EPDCCH by using only one of these manners, the base station does not need to additionally notify the UE of the determined the positions of the physical resources carrying the EPDCCH.

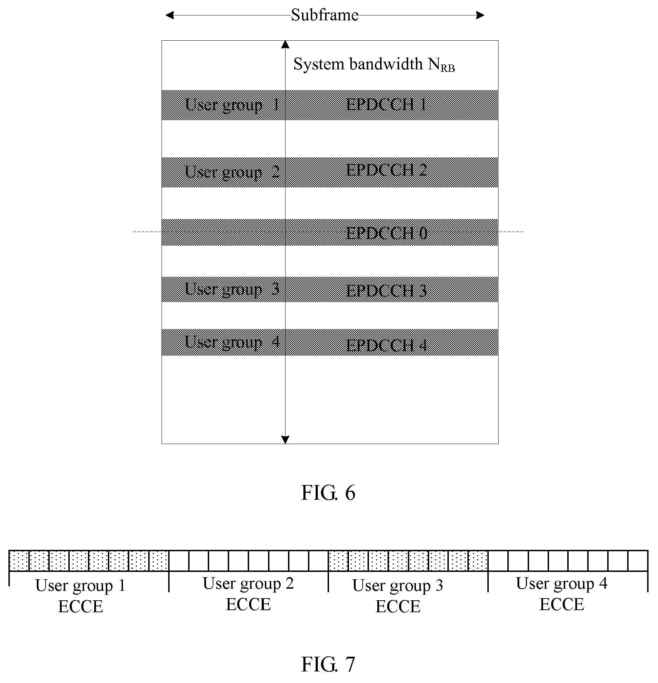

It may be understood that: for the base station, a lot of physical resources carrying the EPDCCH may be defined actually; but for a specific UE, the UE does not need to detect the EPDCCH in all the physical resources that carry the EPDCCH and defined on the base station side, and may detect the EPDCCH in only some defined physical resources carrying the EPDCCH. Therefore, in an embodiment of the present invention, as shown in FIG. 6, a lot of physical resources carrying the EPDCCH defined on the base station side are divided into multiple parts 0, 1, 2, 3..., and each part of the physical resources is shared only by users in a corresponding user group. Definitely, as shown in FIG. 7, an ECCE set formed by all control channel elements ECCEs (Enhanced Control Channel Element) in a lot of physical resources carrying the EPDCCH defined on the base station side are divided into several subsets, and an ECCE in each subset is shared only by users in a corresponding user group.

Optionally, there are a lot of manners of grouping UEs in a current cell. A specific example is as follows:

One manner is to group the UEs according to PRACHs used by the UEs to initiate uplink random access, and each group of the UEs shares a same part of EPDCCH physical resources or a same ECCE subset. In this manner, in this step, the base station determines the position information of the physical resources carrying the EPDCCH according to a physical random access channel PRACH used by the UE to initiate uplink random access. The UE also determines the position information of the physical resources carrying the EPDCCH according to the PRACH used by the UE to initiate the uplink random access, so that the UE may receive the EPDCCH successfully, thereby effectively ensuring normal communication between the UE and the base station.

Further, for example, according to the 3GPP 36.213, when the UE initiates the uplink random access, the UE needs to determine a position of the PRACH used by the UE, where the position includes two dimensions, namely, a time domain and a frequency domain. The position information of the physical resources may be used as one of parameters for grouping the UEs and parameters of some EPDCCH physical resources or ECCE subsets shared by the UE group. Specific information may be a subframe number sfn (subframe number), a system frame number SFN (System Frame Number), and a PRB corresponding to the PRACH.

Another manner is to group the UEs according to UE identifiers, and each group of the UEs shares a same part of EPDCCH physical resources or a same ECCE subset. In this manner, in this step, the base station determines, according to a user identifier of the UE, the position information of the physical resources carrying the EPDCCH. The UE also determines the position information of the physical resources carrying the EPDCCH according to the user identifier of the UE, so that the UE may receive the EPDCCH successfully, thereby effectively ensuring normal communication between the UE and the base station. The user identifier may include an RA-RNTI that should be used by a scheduling message which is determined by the UE according to the position information of the used PRACH and is used to detect a random response message.

Still another manner is to group the UEs by using a RACH sequence, and each group of the UEs uses a specific part of EPDCCH physical resources or a specific ECCE subset. In this manner, in this step, the base station determines the position information of the physical resources carrying the EPDCCH according to a random access channel RACH used by the UE to initiate uplink random access. The UE also determines the position information of the physical resources carrying the EPDCCH according to the RACH sequence used by the UE to initiate the uplink random access, so that the UE may receive the EPDCCH successfully, thereby effectively ensuring normal communication between the UE and the base station. In an existing 3GPP LTE, 64 RACH sequences are defined, and a set of the sequences are grouped according to a specific rule, and meanwhile a mapping relationship is established between each sequence set and the specific part of the EPDCCH physical resources or the ECCE subset, so that the UE may determine, according to the RACH sequence used by the uplink access, a position of the EPDCCH on which a random access response is received.

Further, to detect scheduling information of data such as system information, a part of EPDCCH physical resources or ECCE subsets may be reserved. All the UEs detect an EPDCCH corresponding to the data such as the system information in the reserved resources.

Further, in an embodiment of the present invention, due to existence of frequency hopping, in this step, the base station needs to first determine start position information of the physical resources carrying the EPDCCH. The base station may determine the start position information by using any one of the foregoing manners or another proper manner, and then determine the position information of the physical resources carrying the EPDCCH according to a preset resource frequency hopping mode and the determined start position information.

Specifically, the resource frequency hopping mode may be obtained by using a random sequence, and the PCI is one of initial parameters of the random sequence. For example, a sequence (ci) sequence may be obtained according to a manner of generating a Gold sequence in section 7.2 of the 3GPP 36.211 and the initialized parameter is $c_{init}$=PCI. Assume that the physical resource position (a PRB number) of the EPDCCH that is determined without frequency hopping is $p_j$, where j=1, 2...M. The physical resource position in the frequency hopping mode is as follows:

$$P_j=(C(Y) + p_j) \bmod X$$

If the physical resource position varies with a subframe, a value of Y is a corresponding subframe number sfn; if the physical resource position varies with a system frame, the value of Y is a corresponding system frame number SFN. A value of X may be the distribution interval Gap or the $N_{RB}$ or the like. If the resource position is limited within certain bandwidth $N_{rRB}$, the value of X may be the distribution interval or the $N_{rRB}$, and meanwhile the foregoing calculation formula is changed to:

$$P_j=(C(Y) + p_j) \bmod X + (N_{RB}-N_{rRB})/2$$

Step 12: Send the EPDCCH according to the determined position information of the physical resources carrying the EPDCCH.

Specifically, the base station maps the EPDCCH to the physical resource positions determined in step 11 for transmission.

It should be noted that, if the UE does not know the manner of determining the positions of the physical resources carrying the EPDCCH by the base station, to enable the UE to clearly know the physical resource positions of the EPDCCH and receive the EPDCCH successfully, in this embodiment of the present invention, the base station needs to notify the UE of configuration information of the physical resource positions of the EPDCCH, where the configuration information indicates the positions of the physical resources carrying the EPDCCH, so that the UE may determine the position information of the physical resources carrying the EPDCCH and receive the EPDCCH successfully, thereby effectively ensuring normal communication between the UE and the base station.

Optionally, after determining the positions of the physical resources carrying the EPDCCH, the base station may send the configuration information of the physical resource positions of the EPDCCH to the UE through a public physical channel, and indicate the positions of the physical resources carrying the EPDCCH to the UE by using the configuration information, so that the UE may receive the EPDCCH, thereby ensuring normal communication between the UE and the base station.

In an embodiment of the present invention, if several manners of determining the position information of the physical resources carrying the EPDCCH are predefined for the base station and the UE and the base station may determine the position information by using one of the manners selectively, the base station may send, through a public physical channel, for example, a broadcast PBCH channel or another public physical channel, configuration information of the physical resource positions of the EPDCCH to the user equipment, and indicate the selected determining manner to the UE by using the configuration information. For example, if several manners numbered 1, 2, 3... that may determine the positions of the physical resources carrying the EPDCCH are predefined and the base station selects the manner 1 in this step, the base station indicates the number 1 of the selected manner to the UE through the public physical channel.

For example, in an embodiment of the present invention, the base station may determine specific positions of the physical resource according to a specific resource allocation algorithm, where the resource allocation algorithm may use but is not limited to several downlink resource allocation manners defined in a 3GPP LTE protocol. For a specific resource allocation manner, reference may be made to section 7.1.6 of the 3GPP 36.213, which is not further described in this specification. For the UE, this specific resource allocation algorithm may be preset and may also be notified by the base station to the UE. For example, the base station may notify the UE of the specific resource allocation algorithm through a broadcast PBCH channel or another physical channel.

For another example, in an embodiment of the present invention, several physical resource positions of the EPDCCH are predefined; the base station may select, from the several predefined physical resource positions, a physical resource carrying the EPDCCH, and notify the UE of the selected physical resource through a broadcast PBCH channel or another physical channel.

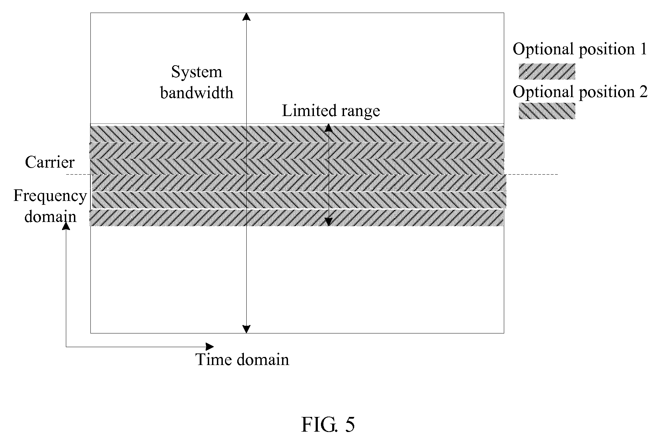

For example, assume that several optional positions 1 and 2 of the EPDCCH resources are defined within the system bandwidth $N_{RB}$, as shown in FIG. 4, a distribution span of the optional positions 1 and 2 may be the whole system bandwidth. Definitely, as shown in FIG. 5, the optional positions 1 and 2 may also be limited within a certain bandwidth range of the system bandwidth. Assuming that the base station selects the optional position 1 as a physical resource carrying the EPDCCH, the base station may indicate the selection result to the UE by using one bit in a physical channel.

Further, to enable the UE to clearly know the physical resource positions of the EPDCCH and receive the EPDCCH successfully, the base station may further notify the UE of the configuration information of the physical resource positions of the EPDCCH by using the following three manners:

Manner 1: Msg2 configuration

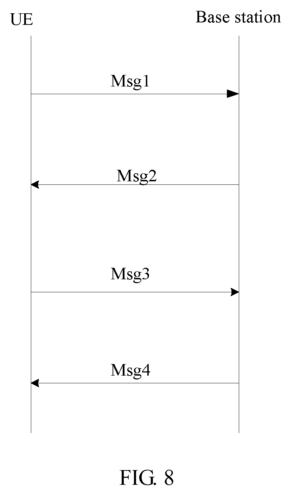

As shown in FIG. 8, when initiating random access to the base station, the UE first sends a first random access request Msg1 to the base station; after receiving the Msg1 from the UE, the base station sends a first random access response Msg2 to the UE according to the Msg1; after receiving the Msg2, the UE sends a second random access request Msg3 to the base station; after receiving the Msg3 from the UE, the base station sends a second random access response Msg4 to the UE according to the Msg3.

Based on the foregoing random access process, the base station may carry the configuration information of the positions of the physical resources carrying the EPDCCH in the Msg2, where the configuration information indicates the positions of the physical resources carrying the EPDCCH, so as to notify the UE of the configuration information of the physical resource positions of the EPDCCH, so that the UE may determine the positions of the physical resources carrying the EPDCCH and receive the EPDCCH successfully, thereby effectively ensuring normal communication between the UE and the base station.

It should be noted that: for the UE, scheduling information of the Msg2 is obtained by detecting the EPDCCH. For an identifier of the scheduling information, reference may be made to the RA-RNTI defined in the 3GPP.

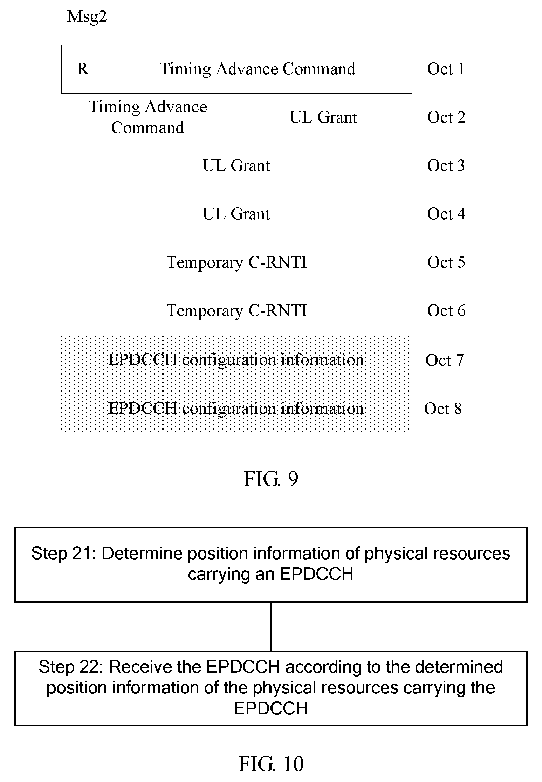

Specifically, for a format of the Msg2 used to carry the configuration information of the positions of the physical resources carrying the EPDCCH, reference may be made to FIG. 9. It should be noted that: except fields for the configuration information of the positions of the physical resource carrying the EPDCCH, other fields in the Msg2 shown in FIG. 9 are the same as those in the prior art, which are not further described herein.

Manner 2: Msg4 configuration

This manner is similar to the manner 1 and the only difference with the manner 1 is that: The base station does not carry the configuration information of the physical resource positions of the EPDCCH in the first random access response Msg2, but carries the configuration information of the positions of the physical resources carrying the EPDCCH in the Msg4, where the configuration information indicates the positions of the physical resources carrying the EPDCCH, so as to notify the UE of the configuration information of the physical resource positions of the EPDCCH, so that the UE may determine the positions of the physical resources carrying the EPDCCH and receive the EPDCCH successfully, thereby effectively ensuring normal communication between the UE and the base station.

It should be noted that: for the UE, in this manner, scheduling information of the Msg2 and the Msg4 are obtained by detecting the EPDCCH.

Manner 3: RRC reconfiguration

Because a system can configure an EPDCCH position of the UE, the base station can improve performance of the EPDCCH by using a channel state information measurement result of the UE and by performing selective frequency scheduling. Therefore, after RRC establishment is complete, the base station may initiate an RRC reconfiguration process according to the channel state measurement result of the UE, and carry the configuration information of the physical resource positions of the EPDCCH in an RRC connection reconfiguration instruction RRCConnectionReconfiguration, where the configuration information indicates the positions of the physical resources carrying the EPDCCH, so as to notify the UE of the configuration information of the physical resource positions of the EPDCCH, so that the UE may determine the positions of the physical resources carrying the EPDCCH and receive the EPDCCH successfully, thereby effectively ensuring normal communication between the UE and the base station.

Optionally, similar to the manner of obtaining the physical resource positions of the EPDCCH, the base station and the UE may obtain, based on any one of the foregoing manners, the positions of the physical resources carrying the EPDCCH in a non-frequency hopping mode. However, in the frequency hopping mode, the base station and the UE may determine the positions of the physical resource carrying the EPDCCH by using a method similar to the foregoing manners.

In the method for sending an EPDCCH provided by this embodiment of the present invention, a UE may clearly know an EPDCCH and a physical resource position of the EPDCCH in an NCT scenario, and further obtain scheduling information needed for communication between the UE and a base station by using the NCT, thereby effectively ensuring normal communication between the UE and the base station.

Optionally, to reduce inter-cell interference, in an embodiment of the present invention, resource position information of an EPDCCH needs to be exchanged between neighboring cells, that is, the base station needs to send the determined position information of the physical resources of the EPDCCH to a neighboring cell, and the base station also needs to receive position information of a physical resource of an EPDCCH of the neighboring cell that is sent by the neighboring cell, so that interference coordination may be performed between the base station and the neighboring cell.

Corresponding to the foregoing method for sending an EPDCCH, an embodiment of the present invention further provides a method for receiving an EPDCCH, which is executed by a UE. It should be noted that: for content that is the same as or corresponding to the content that has been detailed in the foregoing sending method, details are not described again in the following receiving method embodiment. As shown in FIG. 10, the method for receiving an EPDCCH provided by this embodiment of the present invention includes the following steps:

Step 21: Determine position information of physical resources carrying the EPDCCH.

In this step, corresponding to the manners of determining the positions of the physical resources carrying the EPDCCH by the base station, the UE may have a lot of manners of determining the position information of the physical resources carrying the EPDCCH, so that the UE may receive the EPDCCH by detecting physical resource positions corresponding to the position information and obtain scheduling information needed for normal communication with the base station, thereby effectively ensuring the normal communication with the base station.

Specifically, in an embodiment of the present invention:

the position information of the physical resources carrying the EPDCCH includes a position of a start physical RB pair of the physical resources carrying the EPDCCH; and

then, in this step, corresponding to the manners of determining the position of the start physical RB pair of the physical resources carrying the EPDCCH by the base station, the UE may determine the position of the start physical RB pair of the physical resources carrying the EPDCCH according to pre-setting; or, the UE may obtain a physical-layer cell identity according to a synchronization channel, and determine the position of the start physical RB pair of the physical resources carrying the EPDCCH according to the obtained physical-layer cell identity; or, the UE may obtain a physical-layer cell identity according to a synchronization channel, obtain time information according to a broadcast channel, and determine the position of the start physical RB pair of the physical resources carrying the EPDCCH according to the obtained physical-layer cell identity and time information.

Further, in another embodiment of the present invention:

the position information of the physical resources carrying the EPDCCH further includes other information, where the other information includes at least one piece of the following information:

a distribution width of the physical resources carrying the EPDCCH in system bandwidth;
the number of subbands of the physical resources carrying the EPDCCH;
a subband width of the physical resources carrying the EPDCCH;
the number of RB pairs actually used by the physical resources carrying the EPDCCH; and
a distribution interval of neighboring subbands in the physical resources carrying the EPDCCH.

In this case, corresponding to the manners of determining the other information by the base station, the UE may determine the at least one piece of information of the other information according to the pre-setting in this step. Alternatively, the UE may obtain the system bandwidth according to a broadcast channel, and determine the at least one piece of information of the other information according to the obtained system bandwidth.

Optionally, in an embodiment of the present invention, all physical resources carrying the EPDCCH defined on the base station side are grouped, and each group of the physical resources is shared only by users in a corresponding user group. In this case, specifically, the UE may determine the position information of the physical resources carrying the EPDCCH according to a physical random access channel used by uplink random access in this step; or, the UE determines the position information of the physical resources carrying the EPDCCH according to a user identifier of the UE; or, the UE may determine the position information of the physical resources carrying the EPDCCH according to a random access channel RACH sequence used by uplink random access.

Further, in an embodiment of the present invention, due to existence of frequency hopping, specifically, the UE first determines start position information of the physical resources carrying the EPDCCH in this step, where the start position information may be determined by using any one of the foregoing manners. Then, the UE determines the position information of the physical resources carrying the EPDCCH according to a preset resource frequency hopping mode and the determined start position information.

It should be noted that: if the base station determines the position information of the physical resources carrying the EPDCCH according to the pre-setting or according to at least one of the PCI and the time information, for the UE, the pre-setting, the PCI, and the time information may be known without notification from the base station. However, if the base station determines the physical resource positions of the EPDCCH by using another manner, to enable the UE to clearly know the physical resource positions of the EPDCCH and receive the EPDCCH successfully, in this embodiment of the present invention, the base station needs to notify the UE of configuration information of the physical resource positions of the EPDCCH, where the configuration information indicates the positions of the physical resources carrying the EPDCCH, so that the UE may determine the position information of the physical resources carrying the EPDCCH and receive the EPDCCH successfully, thereby effectively ensuring normal communication between the UE and the base station.

Specifically, in an embodiment of the present invention, before this step, the UE receives a public physical channel, where the public physical channel carries configuration information of the physical resource positions of the EPDCCH, and the configuration information indicates the positions of the physical resources carrying the EPDCCH or a manner of determining the positions of the physical resources carrying the EPDCCH. Then, in this step, the UE determines the position information of the physical resources carrying the EPDCCH according to the configuration information that is of the physical resource positions of the EPDCCH and carried in the public physical channel.

Specifically, in an embodiment of the present invention, when initiating random access, the UE first sends a first random access request Msg1 to the base station; after receiving the Msg1 from the UE, the base station sends a first random access response Msg2 to the UE according to the Msg1, where the Msg2 carries configuration information of the positions of the physical resources carrying the EPDCCH. In this step, the UE determines the position information of the physical resources of the EPDCCH according to the configuration information in the Msg2.

Optionally, in an embodiment of the present invention, when initiating random access, the UE first sends a first random access request Msg1 to the base station; after receiving the Msg1 from the UE, the base station sends a first random access response Msg2 to the UE; after receiving the Msg2, the UE sends a second random access request Msg3 to the base station according to the Msg2; after receiving the Msg3 from the UE, the base station sends a second random access response Msg4 to the UE according to the Msg3, where the Msg4 carries configuration information of the positions of the physical resources carrying the EPDCCH. In this step, the UE determines the position information of the physical resources of the EPDCCH according to the configuration information in the Msg4.

Optionally, in an embodiment of the present invention, the base station initiates an RRC reconfiguration process according to a channel state measurement result of the UE, where an RRC connection reconfiguration instruction RRCConnectionReconfiguration carries configuration information of the EPDCCH physical resources. In this step, the UE determines the position information of the physical resources of the EPDCCH according to the configuration information carried in the RRC connection reconfiguration instruction.

Step 22: Receive the EPDCCH according to the determined position information of the physical resources carrying the EPDCCH.

Specifically, in this step, the UE detects physical resource positions corresponding to the position information determined in step 21, and receives the EPDCCH from the physical resource positions. Step 23: Determine the position information of the physical resources carrying the EPDCCH.

In the method for receiving an EPDCCH provided by this embodiment of the present invention, a UE may clearly know an EPDCCH and physical resource positions of the EPDCCH in an NCT scenario, and further obtain scheduling information needed for communication between the UE and a base station by using the NCT, thereby effectively ensuring normal communication between the UE and the base station.

It should be noted that the present invention is actually described by using an LTE EPDCCH channel as an example, but the present invention is not limited thereto. The manners of determining the position information of the physical resources carrying the EPDCCH by the base station and the UE in this embodiment of the present invention may also be applied to another downlink physical channel which is used by a user to receive the scheduling information. Definitely, the present invention may also be applied to methods for sending and receiving the another downlink physical channel which is used by the user to receive the scheduling information.

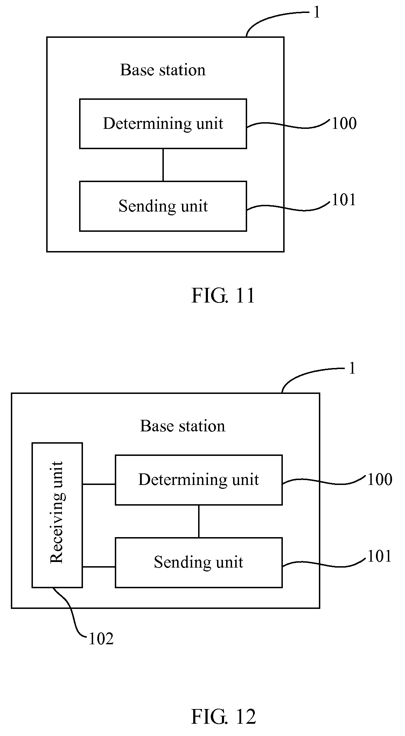

Corresponding to the foregoing sending method embodiment, an embodiment of the present invention further provides a base station 1. As shown in FIG. 11, the base station 1 includes:

a determining unit 100, configured to determine position information of a physical resource carrying an EPDCCH which is sent to a UE; and
a sending unit 101, configured to send the EPDCCH to the UE according to the position information that is of the physical resource carrying the EPDCCH and determined by the determining unit 100.

Specifically, in an embodiment of the present invention:

the position information of the physical resource carrying the EPDCCH includes a position of a start physical RB pair of the physical resource carrying the EPDCCH; and
the determining unit 100 is specifically configured to:

determine the position of the start physical RB pair of the physical resource carrying the EPDCCH according to pre-setting; or
determine the position of the start physical RB pair of the physical resource carrying the EPDCCH according to a physical-layer cell identity; or
determine the position of the start physical RB pair of the physical resource carrying the EPDCCH according to a physical-layer cell identity and time information.

Further, in an embodiment of the present invention:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
in this case, the determining unit 100 is specifically configured to:

determine the at least one piece of information of the other information according to the pre-setting or the system bandwidth.

Optionally, in an embodiment of the present invention, the determining unit 100 is specifically configured to:

determine the position information of the physical resource carrying the EPDCCH according to a physical random access channel PRACH used by the UE to initiate uplink random access;
or,
determine the position information of the physical resource carrying the EPDCCH according to a user identifier of the UE;
or,
determine the position information of the physical resource carrying the EPDCCH according to a random access channel RACH sequence used by the UE to initiate uplink random access.

Optionally, in an embodiment of the present invention, the determining unit is specifically configured to:

determine start position information of the physical resource carrying the EPDCCH; and
determine the position information of the physical resource carrying the EPDCCH according to a preset resource frequency hopping mode and the determined start position information.

Optionally, in an embodiment of the present invention, the sending unit 101 is further configured to:

send, through a public physical channel, configuration information of a physical resource position of the EPDCCH to the UE, where the configuration information indicates a position of the physical resource carrying the EPDCCH or a manner of determining the position of the physical resource carrying the EPDCCH.

Optionally, in an embodiment of the present invention, as shown in FIG. 12, the base station 1 further includes a receiving unit 102, where:

the receiving unit 102 is configured to receive a first random access request from the UE; and
the sending unit 101 is further configured to send a first random access response to the UE according to the first random access request received by the receiving unit 102, where the first random access response carries configuration information of a position of the physical resource carrying the EPDCCH, and the configuration information indicates the position of the physical resource carrying the EPDCCH.

Alternatively, in an embodiment of the present invention:

the receiving unit 102 is configured to receive a first random access request from the UE;
the sending unit 101 is configured to send a first random access response to the UE according to the first random access request received by the receiving unit 102;
the receiving unit 102 is further configured to receive a second random access request from the UE; and
the sending unit 101 is further configured to send a second random access response to the UE according to the second random access request, where the second random access response carries configuration information of a position of the physical resource carrying the EPDCCH, and the configuration information indicates the position of physical resource carrying the EPDCCH.

Optionally, in an embodiment of the present invention, the sending unit 101 is further configured to:

send an RRC reconfiguration instruction to the UE, where the reconfiguration instruction carries configuration information of a position of the physical resource carrying the EPDCCH, and the configuration information indicates the position of the physical resource carrying the EPDCCH.

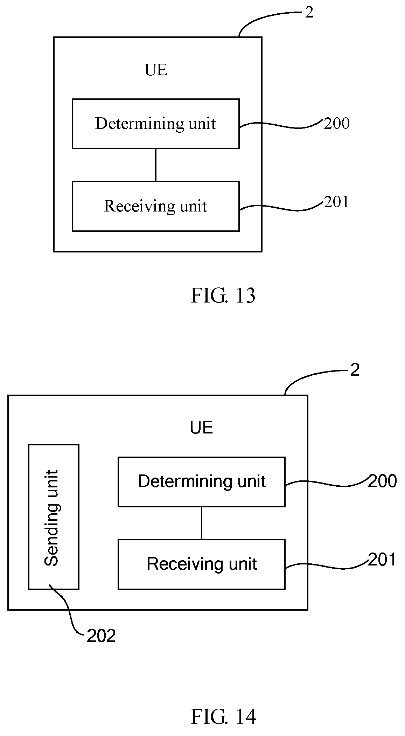

Optionally, in an embodiment of the present invention, also as shown in FIG. 12, the base station 1 further includes a receiving unit 102;
the sending unit 101 is further configured to send the position information that is of the physical resource of the EPDCCH and determined by the determining unit 100 to a neighboring cell; and
the receiving unit 102 is further configured to receive position information of a physical resource of an EPDCCH of the neighboring cell that is sent by the neighboring cell.
With the help of the base station 1 provided by this embodiment of the present invention, a UE may clearly know a physical resource position of an EPDCCH in an NCT scenario, and further obtain scheduling information needed for communication between the UE and the base station 1 by using the NCT, thereby effectively ensuring normal communication between the UE and the base station 1.
It should be noted that the present invention is actually described by using an LTE EPDCCH channel as an example, but the present invention is not limited thereto. The manners of determining the position information of the physical resource carrying the EPDCCH by the base station and the method for sending an EPDCCH in this embodiment of the present invention may also be applied to another downlink physical channel which is used by a user to receive the scheduling information.
Corresponding to the foregoing receiving method embodiment, an embodiment of the present invention further provides a UE2. As shown in FIG. 13, the UE2 includes:

a determining unit 200, configured to determine position information of a physical resource carrying an EPDCCH; and
a receiving unit 201, configured to receive the EPDCCH according to the position information that is of the physical resource carrying the EPDCCH and determined by the determining unit 200.

Specifically, in an embodiment of the present invention:

the position information of the physical resource carrying the EPDCCH includes a position of a start physical RB pair of the physical resource carrying the EPDCCH; and
the determining unit 200 is specifically configured to:

determine the position of the start physical RB pair of the physical resource carrying the EPDCCH according to pre-setting;
or,
obtain a physical-layer cell identity according to a synchronization channel; and
determine the position of the start physical RB pair of the physical resource carrying the EPDCCH according to the obtained physical-layer cell identity;
or,
obtain a physical-layer cell identity according to a synchronization channel, and obtain time information according to a broadcast channel; and
determine the position of the start physical RB pair of the physical resource carrying the EPDCCH according to the obtained physical-layer cell identity and time information.

Further, in an embodiment of the present invention:

the position information of the physical resource carrying the EPDCCH further includes other information, where the other information includes at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
in this case, the determining unit 200 is specifically configured to:

determine the at least one piece of information of the other information according to the pre-setting;
or,
obtain the system bandwidth according to the broadcast channel; and
determine the at least one piece of information of the other information according to the obtained system bandwidth.

Optionally, in an embodiment of the present invention, the determining unit 200 is specifically configured to:

determine the position information of the physical resource carrying the EPDCCH according to a physical random access channel PRACH used by uplink random access;
or,
determine the position information of the physical resource carrying the EPDCCH according to a user identifier;
or,
determine the position information of the physical resource carrying the EPDCCH according to a random access channel RACH sequence used by uplink random access.

Optionally, in an embodiment of the present invention, the determining unit 200 is specifically configured to:

determine start position information of the physical resource carrying the EPDCCH; and
determine the position information of the physical resource carrying the EPDCCH according to a preset resource frequency hopping mode and the determined start position information.

Optionally, in an embodiment of the present invention:

the receiving unit 201 is further configured to:

receive a public physical channel, where the public physical channel carries configuration information of a physical resource position of the EPDCCH, and the configuration information indicates a position of the physical resource carrying the EPDCCH or a manner of determining the position of the physical resource carrying the EPDCCH; and
the determining unit 200 is specifically configured to:

determine the position information of the physical resource carrying the EPDCCH according to the configuration information that is of the physical resource position of the EPDCCH and carried in the public physical channel received by the receiving unit.

Optionally, in an embodiment of the present invention, as shown in FIG. 14, the UE2 further includes a sending unit 202, where:

the sending unit 202 is configured to send a first random access request;
the receiving unit 201 is further configured to receive a first random access response, where the first random access response carries configuration information of a position of the physical resource carrying the EPDCCH, and the configuration information indicates the position of the physical resource carrying the EPDCCH; and
the determining unit 200 is specifically configured to:

determine the position information of the physical resource carrying the EPDCCH according to the configuration information that is of the position of the physical resource carrying the EPDCCH and carried in the first random access response received by the receiving unit 201.

Alternatively, in an embodiment of the present invention:

the sending unit 202 is configured to send a first random access request;
the receiving unit 201 is further configured to receive a first random access response;
the sending unit 202 is further configured to send a second random access request according to the first random access response;
the receiving unit 201 is further configured to receive a second random access response, where the second random access response carries configuration information of a position of the physical resource carrying the EPDCCH, and the configuration information indicates the position of the physical resource carrying the EPDCCH; and
the determining unit 200 is specifically configured to:

determine the position information of the physical resource carrying the EPDCCH according to the configuration information that is of the position of the physical resource carrying the EPDCCH and carried in the second random access response.

Optionally, in an embodiment of the present invention:

the receiving unit 201 is further configured to:

receive an RRC reconfiguration instruction, where the reconfiguration instruction carries configuration information of a position of the physical resource carrying the EPDCCH, and the configuration information indicates the position of the physical resource carrying the EPDCCH; and
the determining unit 200 is specifically configured to:

determine the position information of the physical resource carrying the EPDCCH according to the configuration information that is of the position of the physical resource carrying the EPDCCH and carried in the RRC reconfiguration instruction received by the receiving unit.

The UE2 provided by this embodiment of the present invention may clearly know a physical resource position of an EPDCCH in an NCT scenario, and further obtain scheduling information needed for communication between the UE2 and a base station by using the NCT, thereby effectively ensuring normal communication between the UE2 and the base station.

It should be noted that the present invention is actually described by using an LTE EPDCCH channel as an example, but the present invention is not limited thereto. The manners of determining the position information of the physical resource carrying the EPDCCH by the UE and the method for receiving an EPDCCH in this embodiment of the present invention may also be applied to another downlink physical channel which is used by a user to receive the scheduling information.

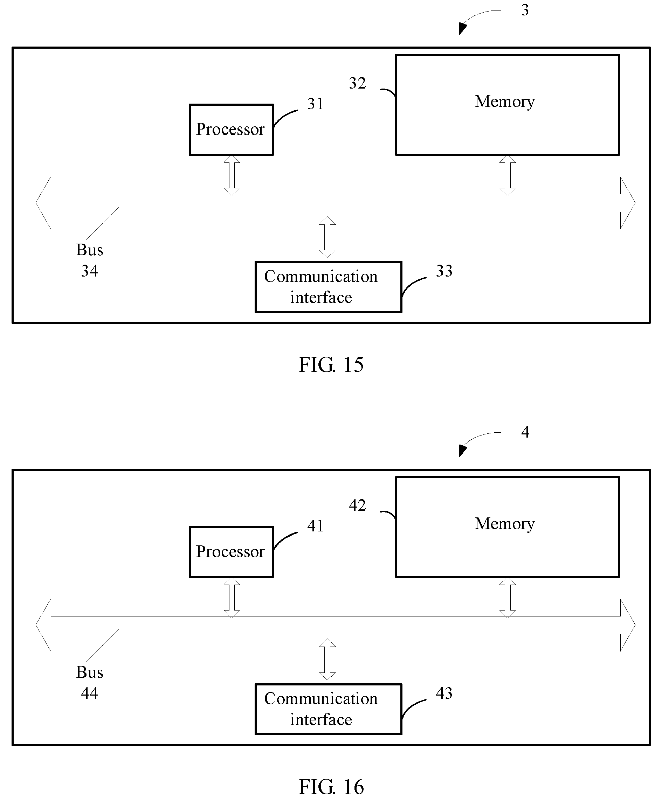

Corresponding to the foregoing sending method embodiment, an embodiment of the present invention further provides a base station 3. As shown in FIG. 15, the base station 3 includes:

a processor 31, a memory 32, a communication interface 33, and a bus 34. The process 31, the memory 32, and the communication interface 33 are connected and implement mutual communication by using the bus 34. The bus 34 may be an industry standard architecture (Industry Standard Architecture, ISA for short) bus, a peripheral component interconnect (Peripheral Component, PCI for short) bus, an Extended Industry Standard Architecture (Extended Industry Standard Architecture, EISA for short) bus, or the like. The bus 34 may be classified into an address bus, a data bus, a control bus, or the like. For the convenience of representation, the bus in FIG. 15 is represented by using only one bold line, but it does not mean that there is only one bus or one type of bus. In FIG. 15:
the memory 32 is configured to store executable program code, where the program code includes a computer operation instruction, and the memory 32 may include a high-speed RAM memory, and may also include a non-volatile memory (non-volatile memory), for example, at least one magnetic disk memory; and
the processor 31 runs a program corresponding to the executable program code by reading the executable program code stored in the memory 32 and is configured to:

determine position information of a physical resource carrying an EPDCCH which is sent to a UE; and
send the EPDCCH to the UE according to the determined position information of the physical resource carrying the EPDCCH.

Specifically, in an embodiment of the present invention:

the position information of the physical resource carrying the EPDCCH includes a position of a start physical RB pair of the physical resource carrying the EPDCCH; and
the processor 31 is configured to:

> determine the position of the start physical RB pair of the physical resource carrying the EPDCCH according to pre-setting;
> or,
> determine the position of the start physical RB pair of the physical resource carrying the EPDCCH according to a physical-layer cell identity;
> or,
> determine the position of the start physical RB pair of the physical resource carrying the EPDCCH according to a physical-layer cell identity and time information.

Further, in an embodiment of the present invention:

the position information of the physical resource carrying the EPDCCH further includes other information, where the other information includes at least one piece of the following information:

> a distribution width of the physical resource carrying the EPDCCH in system bandwidth;
> the number of subbands of the physical resource carrying the EPDCCH;
> a subband width of the physical resource carrying the EPDCCH;
> the number of RB pairs actually used by the physical resource carrying the EPDCCH; and
> a distribution interval of neighboring subbands in the physical resource carrying the EPDCCH; and
> the processor 31 is configured to:
>
> > determine the at least one piece of information of the other information according to the pre-setting or the system bandwidth.

Optionally, in an embodiment of the present invention, the processor 31 is configured to:

determine the position information of the physical resource carrying the EPDCCH according to a physical random access channel PRACH used by the UE to initiate uplink random access;
or,
determine the position information of the physical resource carrying the EPDCCH according to a user identifier of the UE;
or,
determine the position information of the physical resource carrying the EPDCCH according to a random access channel RACH sequence used by the UE to initiate uplink random access.

Optionally, in an embodiment of the present invention, the processor 31 is configured to:

determine start position information of the physical resource carrying the EPDCCH; and
determine the position information of the physical resource carrying the EPDCCH according to a preset resource frequency hopping mode and the determined start position information.

Optionally, in an embodiment of the present invention, the processor 31 is configured to:

send, through a public physical channel, configuration information of a physical resource position of the EPDCCH to the UE, where the configuration information indicates a position of the physical resource carrying the EPDCCH or a manner of determining the position of the physical resource carrying the EPDCCH.

Optionally, in an embodiment of the present invention, the processor 31 is configured to:

receive a first random access request from the UE; and
send a first random access response to the UE according to the received first random access request, where the first random access response carries configuration information of a position of the physical resource carrying the EPDCCH, and the configuration information indicates the position of the physical resource carrying the EPDCCH.

Alternatively, in an embodiment of the present invention, the processor 31 is configured to:

receive a first random access request from the UE;
send a first random access response to the UE according to the received first random access request;
receive a second random access request from the UE; and
send a second random access response to the UE according to the second random access request, where the second random access response carries configuration information of a position of the physical resource carrying the EPDCCH, and the configuration information indicates the position of the physical resource carrying the EPDCCH.

Optionally, in an embodiment of the present invention, the processor 31 is configured to:

send an RRC reconfiguration instruction to the UE, where the reconfiguration instruction carries configuration information of a position of the physical resource carrying the EPDCCH, and the configuration information indicates the position of the physical resource carrying the EPDCCH.

Optionally, in an embodiment of the present invention, the processor 31 is configured to:

send the determined position information of the physical resource of the EPDCCH to a neighboring cell; and
receive position information of a physical resource of an EPDCCH of the neighboring cell that is sent by the neighboring cell.

With the help of the base station 3 provided by this embodiment of the present invention, a UE may clearly know a physical resource position of an EPDCCH in an NCT scenario, and further obtain scheduling information needed for communication between the UE and the base station 3 by using the NCT, thereby effectively ensuring normal communication between the UE and the base station 3.

It should be noted that the present invention is actually described by taking an LTE EPDCCH channel as an example, but the present invention is not limited thereto. The manners of determining the position information of the physical resource carrying the EPDCCH by the base station and the method for sending an EPDCCH in this embodiment of the present invention may also be applied to another downlink physical channel which is used by a user to receive the scheduling information.

Corresponding to the foregoing receiving method embodiment, an embodiment of the present invention further provides a UE4. As shown in FIG. 16, the UE4 includes:

a processor 41, a memory 42, a communication interface 43, and a bus 44. The process 41, the memory 42, and the communication interface 43 are connected and implement mutual communication by using the bus 44. The bus 44 may be an industry standard architecture (Industry Standard Architecture, ISA for short) bus, a peripheral component interconnect (Peripheral Component, PCI for short) bus, an Extended Industry Standard Architecture (Extended Industry Standard Architecture, EISA for short) bus, or the like. The bus 44 may be classified into an address bus, a data bus, a control bus, or the like. For the convenience of representation, the bus in FIG. 16 is represented by using only one bold line, but it does not mean that there is only one bus or one type of bus. In FIG. 16:
the memory 42 is configured to store executable program code, where the program code includes a computer operation instruction, and the memory 42 may include a high-speed RAM memory, and may also include a non-volatile memory (non-volatile memory), for example, at least one magnetic disk memory; and
the processor 4141 runs a program corresponding to the executable program code by reading the executable program code stored in the memory 42 and is configured to:

determine position information of a physical resource carrying an EPDCCH; and
receive the EPDCCH according to the determined position information of the physical resource carrying the EPDCCH.

Specifically, in an embodiment of the present invention:

the position information of the physical resource carrying the EPDCCH includes a position of a start physical RB pair of the physical resource carrying the EPDCCH; and
the processor 41 is configured to:

determine the position of the start physical RB pair of the physical resource carrying the EPDCCH according to pre-setting;

or,

obtain a physical-layer cell identity according to a synchronization channel; and

determine the position of the start physical RB pair of the physical resource carrying the EPDCCH according to the obtained physical-layer cell identity;

or,

obtain a physical-layer cell identity according to a synchronization channel, and obtain time information according to a broadcast channel; and

determine the position of the start physical RB pair of the physical resource carrying the EPDCCH according to the obtained physical-layer cell identity and time information.

Further, in an embodiment of the present invention:

the position information of the physical resource carrying the EPDCCH further includes other information, where the other information includes at least one piece of the following information:

a distribution width of the physical resource carrying the EPDCCH in system bandwidth;

the number of subbands of the physical resource carrying the EPDCCH;

a subband width of the physical resource carrying the EPDCCH;

the number of RB pairs actually used by the physical resource carrying the EPDCCH; and

a distribution interval of neighboring subbands in the physical resource carrying the EPDCCH; and

the processor 41 is configured to:

determine the at least one piece of information of the other information according to the pre-setting;

or,

obtain the system bandwidth according to the broadcast channel; and

determine the at least one piece of information of the other information according to the obtained system bandwidth.

Optionally, in an embodiment of the present invention, the processor 41 is configured to:

determine the position information of the physical resource carrying the EPDCCH according to a physical random access channel PRACH used by uplink random access;

or,

determine the position information of the physical resource carrying the EPDCCH according to a user identifier;

or,

determine the position information of the physical resource carrying the EPDCCH according to a random access channel RACH sequence used by uplink random access.

Optionally, in an embodiment of the present invention, the processor 41 is configured to:

determine start position information of the physical resource carrying the EPDCCH; and

determine the position information of the physical resource carrying the EPDCCH according to a preset resource frequency hopping mode and the determined start position information.

Optionally, in an embodiment of the present invention, the processor 41 is configured to:

receive a public physical channel, where the public physical channel carries configuration information of a physical resource position of the EPDCCH, and the configuration information indicates a position of the physical resource carrying the EPDCCH or a manner of determining the position of the physical resource carrying the EPDCCH; and

determine the position information of the physical resource carrying the EPDCCH according to the configuration information that is of the physical resource position of the EPDCCH and carried in the received public physical channel.

Optionally, in an embodiment of the present invention, the processor 41 is configured to:

send a first random access request;

receive a first random access response, where the first random access response carries configuration information of a position of the physical resource carrying the EPDCCH, and the configuration information indicates the position of the physical resource carrying the EPDCCH; and

determine the position information of the physical resource carrying the EPDCCH according to the configuration information that is of the position of the physical resource carrying the EPDCCH and carried in the received first random access response.

Alternatively, in an embodiment of the present invention, the processor 41 is configured to:

send a first random access request;
receive a first random access response;
send a second random access request according to the first random access response;
receive a second random access response, where the second random access response carries configuration information of a position of the physical resource carrying the EPDCCH, and the configuration information indicates the position of the physical resource carrying the EPDCCH; and
determine the position information of the physical resource carrying the EPDCCH according to the configuration information that is of the position of the physical resource carrying the EPDCCH and carried in the second random access response.

Optionally, in an embodiment of the present invention, the processor 41 is configured to:

receive an RRC reconfiguration instruction, where the reconfiguration instruction carries configuration information of a position of the physical resource carrying the EPDCCH, and the configuration information indicates the position of the physical resource position carrying the EPDCCH; and
determine the position information of the physical resource carrying the EPDCCH according to the configuration information that is of the position of the physical resource carrying the EPDCCH and carried in the received RRC reconfiguration instruction.

The UE4 provided by this embodiment of the present invention may clearly know a physical resource position of an EPDCCH in an NCT scenario, and further obtain scheduling information needed for communication between the UE4 and a base station by using the NCT, thereby effectively ensuring normal communication between the UE4 and the base station.

For specific working methods of the base station and the UE provided by the embodiments of the present invention, reference may be made to the foregoing method embodiments. Therefore, the descriptions of the base station and the UE are relatively simple. For specific details, reference is made to the foregoing method embodiments.

Corresponding to the foregoing method and apparatus embodiments, the present invention further provides a communications system, including:

a base station and at least one user equipment.

The base station determines position information of a physical resource carrying a physical downlink control channel EPDCCH which is sent to the user equipment, and sends the EPDCCH to the user equipment according to the determined position information of the physical resource carrying the EPDCCH.

The user equipment determines the position information of the physical resource carrying the EPDCCH which is sent by the base station, and receives the EPDCCH according to the determined position information of the physical resource carrying the EPDCCH.

Optionally, in an embodiment of the present invention:

the position information of the physical resource carrying the EPDCCH includes a position of a start physical resource block (RB) pair of the physical resource position carrying the EPDCCH; and
the base station and the user equipment determine the position of the start physical RB pair of the physical resource carrying the EPDCCH according to pre-setting; or
the base station and the user equipment determine the position of the start physical RB pair of the physical resource carrying the EPDCCH according to a physical-layer cell identity; or
the base station and the user equipment determine the position of the start physical RB pair of the physical resource carrying the EPDCCH according to a physical-layer cell identity and time information.

Optionally, in an embodiment of the present invention:

the base station and the user equipment determine the position information of the physical resource carrying the EPDCCH according to a physical random access channel PRACH used by the user equipment to initiate uplink random access;
or,
the base station and the user equipment determine the position information of the physical resource carrying the EPDCCH according to a user identifier of the user equipment;
or,
the base station and the user equipment determine the position information of the physical resource carrying the EPDCCH according to a random access channel RACH sequence used by the user equipment to initiate uplink random access.

Optionally, in an embodiment of the present invention:

when the base station and the user equipment determine the position information of the physical resource carrying the EPDCCH, the base station and the user equipment first determine start position information of the physical resource carrying the EPDCCH, and then determine the position information of the physical resource carrying the EPDCCH according to a preset resource frequency hopping mode and the determined start position information.

Optionally, in an embodiment of the present invention:

the base station sends, through a public physical channel, configuration information of a physical resource position of the EPDCCH to the user equipment, where the configuration information indicates a position of the physical resource carrying the EPDCCH or a manner of determining the position of the physical resource carrying the EPDCCH; and
the user equipment receives the public physical channel, and determines the position information of the physical resource carrying the EPDCCH according to the configuration information that is of the physical resource position of the EPDCCH and carried in the public physical channel.

Optionally, in an embodiment of the present invention:

the user equipment sends a first random access request to the base station;
the base station receives the first random access request, and sends a first random access response to the user equipment according to the first random access request, where the first random access response carries configuration information of a position of the physical resource carrying the EPDCCH, and the configuration information indicates the position of the physical resource carrying the EPDCCH; and
the user equipment receives the first random access response, and determines the position information of the physical resource carrying the EPDCCH according to the configuration information that is of the position of the physical resource carrying the EPDCCH and carried in the first random access response.

Optionally, in an embodiment of the present invention:

the user equipment sends a first random access request to the base station;
the base station receives the first random access request, and sends a first random access response to the user equipment according to the first random access request;
the user equipment sends a second random access request according to the first random access response;
the base station receives the second random access request, and sends a second random access response to the user equipment according to the second random access request, where the second random access response carries configuration information of a position of the physical resource carrying the EPDCCH, and the configuration information indicates the position of the physical resource carrying the EPDCCH; and
the user equipment receives the second random access response, and determines the position information of the physical resource carrying the EPDCCH according to the configuration information that is of the position of the physical resource carrying the EPDCCH and carried in the second random access response.

Optionally, in an embodiment of the present invention:

the base station sends a radio resource control (RRC) reconfiguration instruction to the user equipment, where the reconfiguration instruction carries configuration information of a position of the physical resource carrying the EPDCCH, and the configuration information indicates the position of the physical resource carrying the EPDCCH; and
the user equipment receives the RRC reconfiguration instruction, and determines the position information of the physical resource carrying the EPDCCH according to the configuration information that is of the position of the physical resource carrying the EPDCCH and carried in the RRC reconfiguration instruction.

In the communications system provided by this embodiment of the present invention, a UE may clearly know a physical resource position of an EPDCCH in an NCT scenario, and further obtain scheduling information needed for communication between the UE and a base station by using the NCT, thereby effectively ensuring normal communication between the UE and the base station.

It should be emphasized that: for specific working methods of the base station and the UE in the communications system provided by this embodiment of the present invention, reference may be made to the foregoing method embodiments; therefore, the descriptions of the communications system embodiment are relatively simple and specific details are not further described.

It should be noted that the present invention is actually described by using an LTE EPDCCH channel as an example, but the present invention is not limited thereto. The manners of determining the position information of the physical resource carrying the EPDCCH by the base station and the method for receiving an EPDCCH in this embodiment of the present invention may also be applied to another downlink physical channel which is used by a user to receive the scheduling information.

The embodiments of the specification are described in a progressive way. For identical and similar parts between the embodiments, reference may be made to each other, and each embodiment focuses on parts different from other embodiments. In particular, because the apparatus embodiments are basically similar to the method embodiments, the apparatus embodiments are described relatively simply. For details about related content, reference may be made to some descriptions of the method embodiments.

It should be noted that the described apparatus embodiment is merely exemplary. The units described as separate parts may or may not be physically separate, and parts displayed as units may or may not be physical units, may be located in one position, or may be distributed on a plurality of network units. A part or all of the modules may be selected according to actual needs to achieve the objectives of the solutions of the embodiments. In addition, in the accompanying drawings of the apparatus embodiments provided by the present invention, a connection relationship between modules represents a communication connection between the modules, which may be implemented as one or more communication buses or signal cables. A person of ordinary skill in the art may understand and implement the embodiments of the present invention without creative efforts.

Based on the foregoing descriptions of the embodiments, a person skilled in the art may clearly understand that the present invention may be implemented by software in addition to necessary universal hardware, and may also be implemented by hardware, including an integrated circuit, a CPU, a memory, a component or the like. Generally, functions performed by a computer program can be easily implemented by using corresponding hardware. In addition, a specific hardware structure used to implement a same function may also be diversified, for example, an analog circuit, a digital circuit or a circuit. However, for the present invention, a software program is a preferred implementation manner in most cases. Based on such an understanding, the technical solutions of the present invention essentially or the part contributing to the prior art may be implemented in a form of a software product. The computer software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of the present invention.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

**Claims**

1. A method for sending an enhanced physical downlink control channel (EPDCCH), comprising:

   determining position information of a physical resource carrying the EPDCCH; and
   sending the EPDCCH to a user equipment according to the determined position information of the physical resource carrying the EPDCCH.

2. The sending method according to claim 1, wherein:

   the position information of the physical resource carrying the EPDCCH comprises a position of a start physical resource block (RB) pair of the physical resource carrying the EPDCCH; and
the determining position information of a physical resource carrying the EPDCCH comprises:

> determining the position of the start physical RB pair of the physical resource carrying the EPDCCH according to pre-setting; or
> determining the position of the start physical RB pair of the physical resource carrying the EPDCCH according to a physical-layer cell identity; or
> determining the position of the start physical RB pair of the physical resource carrying the EPDCCH according to a physical-layer cell identity and time information.

3. The sending method according to claim 2, wherein the position information of the physical resource carrying the EPDCCH further comprises other information, wherein the other information comprises at least one piece of the following information:

> a distribution width of the physical resource carrying the EPDCCH in system bandwidth;
> the number of subbands of the physical resource carrying the EPDCCH;
> a width of a subband of the physical resource carrying the EPDCCH;
> the number of RB pairs actually used by the physical resource carrying the EPDCCH; and
> a distribution interval of neighboring subbands in the physical resource carrying the EPDCCH; and
> the determining position information of a physical resource carrying the EPDCCH comprises:

> > determining the at least one piece of information of the other information according to the pre-setting or the system bandwidth.

4. The sending method according to claim 1, wherein:

> the determining position information of a physical resource carrying the EPDCCH comprises:

> > determining the position information of the physical resource carrying the EPDCCH according to a physical random access channel PRACH used by the user equipment to initiate uplink random access; or,
> > determining the position information of the physical resource carrying the EPDCCH according to a user identifier of the user equipment; or,
> > determining the position information of the physical resource carrying the EPDCCH according to a random access channel RACH sequence used by the user equipment to initiate uplink random access.

5. The sending method according to any one of claims 1 to 4, wherein the determining position information of a physical resource carrying the EPDCCH comprises:

> determining start position information of the physical resource carrying the EPDCCH; and
> determining the position information of the physical resource carrying the EPDCCH according to a preset resource frequency hopping mode and the determined start position information.

6. The sending method according to any one of claims 1 to 5, wherein the sending method further comprises:

> sending, through a public physical channel, configuration information of a physical resource position of the EPDCCH to the user equipment, wherein the configuration information indicates a position of the physical resource carrying the EPDCCH or a manner of determining the position of the physical resource carrying the EPDCCH.

7. The sending method according to any one of claims 1 to 5, wherein the sending method further comprises:

> receiving a first random access request from the user equipment; and
> sending a first random access response to the user equipment according to the first random access request, wherein the first random access response carries configuration information of a position of the physical resource carrying the EPDCCH, and the configuration information indicates the position of the physical resource carrying the EPDCCH.

8. The sending method according to any one of claims 1 to 5, wherein the sending method further comprises:

receiving a first random access request from the user equipment;
sending a first random access response to the user equipment according to the first random access request;
receiving a second random access request from the user equipment; and
sending a second random access response to the user equipment according to the second random access request, wherein the second random access response carries configuration information of a position of the physical resource carrying the EPDCCH, and the configuration information indicates the position of the physical resource carrying the EPDCCH.

9. The sending method according to any one of claims 1 to 5, wherein the sending method further comprises:

sending a radio resource control (RRC) reconfiguration instruction to the user equipment, wherein the reconfiguration instruction carries configuration information of a position of the physical resource carrying the EPDCCH, and the configuration information indicates the position of the physical resource carrying the EPDCCH.

10. The sending method according to any one of claims 1 to 9, wherein the sending method further comprises:

sending the determined position information of the physical resource of the EPDCCH to a neighboring cell; and
receiving position information of a physical resource of an EPDCCH of the neighboring cell that is sent by the neighboring cell.

11. A method for receiving an EPDCCH, comprising:

determining position information of a physical resource carrying the EPDCCH; and
receiving the EPDCCH according to the determined position information of the physical resource carrying the EPDCCH.

12. The receiving method according to claim 11, wherein:

the position information of the physical resource carrying the EPDCCH comprises a position of a start physical resource block RB pair of the physical resource carrying the EPDCCH; and
the determining position information of a physical resource carrying the EPDCCH comprises:

determining the position of the start physical RB pair of the physical resource carrying the EPDCCH according to pre-setting; or
determining the position of the start physical RB pair of the physical resource carrying the EPDCCH according to a physical-layer cell identity; or
determining the position of the start physical RB pair of the physical resource carrying the EPDCCH according to a physical-layer cell identity and time information.

13. The receiving method according to claim 12, wherein the position information of the physical resource carrying the EPDCCH further comprises other information, wherein the other information comprises at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH;
and
a distribution interval of neighboring subbands in the physical resource carrying the EPDCCH; and
the determining position information of a physical resource carrying the EPDCCH comprises:

determining the at least one piece of information of the other information according to the pre-setting;

or,

determining the at least one piece of information of the other information according to the system bandwidth.

14. The receiving method according to claim 11, wherein:

the determining position information of a physical resource carrying the EPDCCH comprises:

determining the position information of the physical resource carrying the EPDCCH according to a physical random access channel PRACH used by uplink random access;
or,
determining the position information of the physical resource carrying the EPDCCH according to a user identifier;
or,
determining the position information of the physical resource carrying the EPDCCH according to a random access channel RACH sequence used by uplink random access.

15. The receiving method according to any one of claims 11 to 14, wherein the determining position information of a physical resource carrying the EPDCCH comprises:

determining start position information of the physical resource carrying the EPDCCH;
and
determining the position information of the physical resource carrying the EPDCCH according to a preset resource frequency hopping mode and the determined start position information.

16. The receiving method according to any one of claims 11 to 15, wherein the receiving method further comprises:

receiving a public physical channel, wherein the public physical channel carries configuration information of a physical resource position of the EPDCCH, and the configuration information indicates a position of the physical resource carrying the EPDCCH or a manner of determining the position of the physical resource carrying the EPDCCH; and
the determining position information of a physical resource carrying the EPDCCH comprises:

determining the position information of the physical resource carrying the EPDCCH according to the configuration information that is of the physical resource position of the EPDCCH and carried in the public physical channel.

17. The receiving method according to any one of claims 11 to 15, wherein the receiving method further comprises:

sending a first random access request; and
receiving a first random access response, wherein the first random access response carries configuration information of a position of the physical resource carrying the EPDCCH, and the configuration information indicates the position of the physical resource carrying the EPDCCH; and
the determining position information of a physical resource carrying the EPDCCH comprises:

determining the position information of the physical resource carrying the EPDCCH according to the configuration information that is of the position of the physical resource carrying the EPDCCH and carried in the first random access response.

18. The receiving method according to any one of claims 11 to 15, wherein the receiving method further comprises:

sending a first random access request;
receiving a first random access response;
sending a second random access request according to the first random access response;
and
receiving a second random access response, wherein the second random access response carries configuration information of a position of the physical resource carrying the EPDCCH, and the configuration information indicates the position of the physical resource carrying the EPDCCH; and
the determining position information of a physical resource carrying the EPDCCH comprises:

determining the position information of the physical resource carrying the EPDCCH according to the configuration information that is of the position of the physical resource carrying the EPDCCH and carried in the second random access response.

**19.** The receiving method according to any one of claims 11 to 15, wherein the receiving method further comprises:

receiving an RRC reconfiguration instruction, wherein the reconfiguration instruction carries configuration information of a position of the physical resource carrying the EPDCCH, and the configuration information indicates the position of the physical resource carrying the EPDCCH; and
the determining position information of a physical resource carrying the EPDCCH comprises:

determining the position information of the physical resource carrying the EPDCCH according to the configuration information that is of the position of the physical resource carrying the EPDCCH and carried in the RRC reconfiguration instruction.

**20.** A base station, comprising:

a determining unit, configured to determine position information of a physical resource carrying an EPDCCH which is sent to a user equipment; and
a sending unit, configured to send the EPDCCH to the user equipment according to the position information that is of the physical resource carrying the EPDCCH and determined by the determining unit.

**21.** The base station according to claim 20, wherein:

the position information of the physical resource carrying the EPDCCH comprises a position of a start physical RB pair of the physical resource carrying the EPDCCH; and
the determining unit is specifically configured to:

determine the position of the start physical RB pair of the physical resource carrying the EPDCCH according to pre-setting; or
determine the position of the start physical RB pair of the physical resource carrying the EPDCCH according to a physical-layer cell identity; or
determine the position of the start physical RB pair of the physical resource carrying the EPDCCH according to a physical-layer cell identity and time information.

**22.** The base station according to claim 21, wherein the position information of the physical resource carrying the EPDCCH further comprises other information, wherein the other information comprises at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the determining unit is specifically configured to:

determine the at least one piece of information of the other information according to the pre-setting or the system bandwidth.

**23.** The base station according to claim 20, wherein:

the determining unit is specifically configured to:

determine the position information of the physical resource carrying the EPDCCH according to a physical random access channel PRACH used by the user equipment to initiate uplink random access; or,
determine the position information of the physical resource carrying the EPDCCH according to a user identifier of the user equipment;
or,
determine the position information of the physical resource carrying the EPDCCH according to a random access channel RACH sequence used by the user equipment to initiate uplink random access.

24. The base station according to any one of claims 20 to 23, wherein the determining unit is specifically configured to:

determine start position information of the physical resource carrying the EPDCCH; and
determine the position information of the physical resource carrying the EPDCCH according to a preset resource frequency hopping mode and the determined start position information.

25. The base station according to any one of claims 20 to 24, wherein the sending unit is further configured to:

send, through a public physical channel, configuration information of a physical resource position of the EPDCCH to the user equipment, wherein the configuration information indicates a position of the physical resource carrying the EPDCCH or a manner of determining the position of the physical resource carrying the EPDCCH.

26. The base station according to any one of claims 20 to 24, wherein:

the base station further comprises a receiving unit, wherein:

the receiving unit is configured to receive a first random access request from the user equipment; and
the sending unit is further configured to send a first random access response to the user equipment according to the first random access request received by the receiving unit, wherein the first random access response carries configuration information of a position of the physical resource carrying the EPDCCH, and the configuration information indicates the position of the physical resource carrying the EPDCCH.

27. The base station according to any one of claims 20 to 24, wherein the base station further comprises a receiving unit, wherein:

the receiving unit is configured to receive a first random access request from the user equipment;
the sending unit is configured to send a first random access response to the user equipment according to the first random access request received by the receiving unit;
the receiving unit is further configured to receive a second random access request from the user equipment; and
the sending unit is further configured to send a second random access response to the user equipment according to the second random access request, wherein the second random access response carries configuration information of the position of the physical resource carrying the EPDCCH, and the configuration information indicates the position of the physical resource carrying the EPDCCH.

28. The base station according to any one of claims 20 to 24, wherein the sending unit is further configured to:

send an RRC reconfiguration instruction to the user equipment, wherein the reconfiguration instruction carries configuration information of a position of the physical resource carrying the EPDCCH, and the configuration information indicates the position of the physical resource carrying the EPDCCH.

29. The base station according to any one of claims 20 to 28, wherein:

the base station further comprises a receiving unit;
the sending unit is further configured to send the position information that is of the physical resource of the EPDCCH and determined by the determining unit to a neighboring cell; and
the receiving unit is further configured to receive position information of a physical resource of an EPDCCH of the neighboring cell that is sent by the neighboring cell.

30. A user equipment, comprising:

a determining unit, configured to determine position information of a physical resource carrying an EPDCCH; and
a receiving unit, configured to receive the EPDCCH according to the position information that is of the physical resource carrying the EPDCCH and determined by the determining unit.

**31.** The user equipment according to claim 30, wherein:

the position information of the physical resource carrying the EPDCCH comprises a position of a start physical RB pair of the physical resource carrying the EPDCCH; and
the determining unit is specifically configured to:

determine the position of the start physical RB pair of the physical resource carrying the EPDCCH according to pre-setting;
or,
determine the position of the start physical RB pair of the physical resource carrying the EPDCCH according to a physical-layer cell identity;
or,
determine the position of the start physical RB pair of the physical resource carrying the EPDCCH according to a physical-layer cell identity and time information.

**32.** The user equipment according to claim 31, wherein the position information of the physical resource carrying the EPDCCH further comprises other information, wherein the other information comprises at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the determining unit is specifically configured to:

determine the at least one piece of information of the other information according to the pre-setting;
or,
determine the at least one piece of information of the other information according to the system bandwidth.

**33.** The user equipment according to claim 30, wherein:

the determining unit is specifically configured to:

determine the position information of the physical resource carrying the EPDCCH according to a physical random access channel PRACH used by uplink random access;
or,
determine the position information of the physical resource carrying the EPDCCH according to a user identifier;
or,
determine the position information of the physical resource carrying the EPDCCH according to a random access channel RACH sequence used by uplink random access.

**34.** The user equipment according to any one of claims 30 to 33, wherein the determining unit is specifically configured to:

determine start position information of the physical resource carrying the EPDCCH; and
determine the position information of the physical resource carrying the EPDCCH according to a preset resource frequency hopping mode and the determined start position information.

**35.** The user equipment according to any one of claims 30 to 34, wherein the receiving unit is further configured to:

receive a public physical channel, wherein the public physical channel carries configuration information of a physical resource position of the EPDCCH, and the configuration information indicates a position of the physical resource carrying the EPDCCH or a manner of determining the position of the physical resource carrying the EPDCCH; and
the determining unit is specifically configured to:

determine the position information of the physical resource carrying the EPDCCH according to the configuration information that is of the physical resource position of the EPDCCH and carried in the public physical channel received by the receiving unit.

**36.** The user equipment according to any one of claims 30 to 34, wherein the user equipment further comprises a sending unit, wherein:

the sending unit is configured to send a first random access request;
the receiving unit is further configured to receive a first random access response, wherein the first random access response carries configuration information of a position of the physical resource carrying the EPDCCH, and the configuration information indicates the position of the physical resource carrying the EPDCCH; and
the determining unit is specifically configured to:

determine the position information of the physical resource carrying the EPDCCH according to the configuration information that is of the position of the physical resource carrying the EPDCCH and carried in the first random access response received by the receiving unit.

**37.** The user equipment according to any one of claims 30 to 34, wherein the user equipment further comprises a sending unit, wherein:

the sending unit is configured to send a first random access request;
the receiving unit is further configured to receive a first random access response;
the sending unit is further configured to send a second random access request according to the first random access response;
the receiving unit is further configured to receive a second random access response, wherein the second random access response carries configuration information of a position of the physical resource carrying the EPDCCH, and the configuration information indicates the position of the physical resource carrying the EPDCCH; and
the determining unit is specifically configured to:

determine the position information of the physical resource carrying the EPDCCH according to the configuration information that is of the position of the physical resource carrying the EPDCCH and carried in the second random access response.

**38.** The user equipment according to any one of claims 30 to 34, wherein the receiving unit is further configured to:

receive an RRC reconfiguration instruction, wherein the reconfiguration instruction carries configuration information of a position of the physical resource carrying the EPDCCH, and the configuration information indicates the position of the physical resource carrying the EPDCCH; and
the determining unit is specifically configured to:

determine the position information of the physical resource carrying the EPDCCH according to the configuration information that is of the position of the physical resource carrying the EPDCCH and carried in the RRC reconfiguration instruction received by the receiving unit.

**39.** A base station, comprising:

a processor, a memory, a communication interface, and a bus, wherein:

the processor, the memory, and the communication interface are connected and implement mutual communication by using the bus;
the memory stores executable program code; and
the processor runs a program corresponding to the executable program code by reading the executable program code stored in the memory and is configured to:

determine position information of a physical resource carrying an EPDCCH which is sent to a user equipment; and
send the EPDCCH to the user equipment according to the determined position information of the physical resource carrying the EPDCCH.

**40.** The base station according to claim 39, wherein:

the position information of the physical resource carrying the EPDCCH comprises a position of a start physical RB pair of the physical resource carrying the EPDCCH; and
the processor is configured to:

determine the position of the start physical RB pair of the physical resource carrying the EPDCCH according to pre-setting;
or,
determine the position of the start physical RB pair of the physical resource carrying the EPDCCH according to a physical-layer cell identity;
or,
determine the position of the start physical RB pair of the physical resource carrying the EPDCCH according to a physical-layer cell identity and time information.

**41.** The base station according to claim 40, wherein the position information of the physical resource carrying the EPDCCH further comprises other information, wherein the other information comprises at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the processor is configured to:

determine the at least one piece of information of the other information according to the pre-setting or the system bandwidth.

**42.** The base station according to claim 39, wherein:

the processor is configured to:

determine the position information of the physical resource carrying the EPDCCH according to a physical random access channel PRACH used by the user equipment to initiate uplink random access;
or,
determine the position information of the physical resource carrying the EPDCCH according to a user identifier of the user equipment;
or,
determine the position information of the physical resource carrying the EPDCCH according to a random access channel RACH sequence used by the user equipment to initiate uplink random access.

**43.** The base station according to any one of claims 39 to 42, wherein the processor is configured to:

determine start position information of the physical resource carrying the EPDCCH; and
determine the position information of the physical resource carrying the EPDCCH according to a preset resource frequency hopping mode and the determined start position information.

**44.** The base station according to any one of claims 39 to 43, wherein the processor is configured to:

send, through a public physical channel, configuration information of a physical resource position of the EPDCCH to the user equipment, wherein the configuration information indicates a position of the physical resource carrying the EPDCCH or a manner of determining the position of the physical resource carrying the EPDCCH.

**45.** The base station according to claims 39 to 43, wherein:

the processor is configured to:

receive a first random access request from the user equipment; and
send a first random access response to the user equipment according to the received first random access request, wherein the first random access response carries configuration information of a position of the physical resource carrying the EPDCCH, and the configuration information indicates the position of the physical resource carrying the EPDCCH.

**46.** The base station according to claims 39 to 43, wherein the processor is configured to:

receive a first random access request from the user equipment;
send a first random access response to the user equipment according to the received first random access request;
receive a second random access request from the user equipment; and
send a second random access response to the user equipment according to the second random access request, wherein the second random access response carries configuration information of a position of the physical resource carrying the EPDCCH, and the configuration information indicates the position of the physical resource carrying the EPDCCH.

**47.** The base station according to claims 39 to 43, wherein the processor is configured to:

send an RRC reconfiguration instruction to the user equipment, wherein the reconfiguration instruction carries configuration information of a position of the physical resource carrying the EPDCCH, and the configuration information indicates the position of the physical resource carrying the EPDCCH.

**48.** The base station according to any one of claims 39 to 47, wherein:

the processor is configured to:

send the determined position information of the physical resource of the EPDCCH to a neighboring cell; and
receive position information of a physical resource of an EPDCCH of the neighboring cell that is sent by the neighboring cell.

**49.** A user equipment, comprising:

a processor, a memory, a communication interface, and a bus, wherein:

the processor, the memory, and the communication interface are connected and implement mutual communication by using the bus;
the memory stores executable program code; and
the processor runs a program corresponding to the executable program code by reading the executable program code stored in the memory and is configured to:

determine position information of a physical resource carrying an EPDCCH; and
receive the EPDCCH according to the determined position information of the physical resource carrying the EPDCCH.

**50.** The user equipment according to claim 49, wherein:

the position information of the physical resource carrying the EPDCCH comprises a position of a start physical RB pair of the physical resource carrying the EPDCCH; and
the processor is configured to:

determine the position of the start physical RB pair of the physical resource carrying the EPDCCH according to pre-setting;
or,
determine the position of the start physical RB pair of the physical resource carrying the EPDCCH according to a physical-layer cell identity;
or,
determine the position of the start physical RB pair of the physical resource carrying the EPDCCH according to a physical-layer cell identity and time information.

**51.** The user equipment according to claim 50, wherein:

the position information of the physical resource carrying the EPDCCH further includes other information, wherein the other information comprises at least one piece of the following information:

a distribution width of the physical resource carrying the EPDCCH in system bandwidth;
the number of subbands of the physical resource carrying the EPDCCH;
a subband width of the physical resource carrying the EPDCCH;
the number of RB pairs actually used by the physical resource carrying the EPDCCH; and
a distribution interval of neighboring subbands in the physical resource carrying the EPDCCH; and
the processor is configured to:

determine the at least one piece of information of the other information according to the pre-setting;
or,
determine the at least one piece of information of the other information according to the system bandwidth.

**52.** The user equipment according to claim 49, wherein:

the processor is configured to:

determine the position information of the physical resource carrying the EPDCCH according to a physical random access channel PRACH used by uplink random access;
or,
determine the position information of the physical resource carrying the EPDCCH according to a user identifier;
or,
determine the position information of the physical resource carrying the EPDCCH according to a random access channel RACH sequence used by uplink random access.

**53.** The user equipment according to any one of claims 49 to 52, wherein the processor is configured to:

determine start position information of the physical resource carrying the EPDCCH; and
determine the position information of the physical resource carrying the EPDCCH according to a preset resource frequency hopping mode and the determined start position information.

**54.** The user equipment according to any one of claims 49 to 53, wherein the processor is configured to:

receive a public physical channel, wherein the public physical channel carries configuration information of a physical resource position of the EPDCCH, and the configuration information indicates a position of the physical resource carrying the EPDCCH or a manner of determining the position of the physical resource carrying the EPDCCH; and
determine the position information of the physical resource carrying the EPDCCH according to the configuration information that is of the physical resource position of the EPDCCH and carried in the received public physical channel.

**55.** The user equipment according to any one of claims 49 to 53, wherein the processor is configured to:

send a first random access request;
receive a first random access response, wherein the first random access response carries configuration information of a position of the physical resource carrying the EPDCCH, and the configuration information indicates the position of the physical resource carrying the EPDCCH; and
determine the position information of the physical resource carrying the EPDCCH according to the configuration information that is of the position of the physical resource carrying the EPDCCH and carried in the received first random access response.

**56.** The user equipment according to any one of claims 49 to 53, wherein the processor is configured to:

send a first random access request;

receive a first random access response;

send a second random access request according to the first random access response;

receive a second random access response, wherein the second random access response carries configuration information of a position of the physical resource carrying the EPDCCH, and the configuration information indicates the position of the physical resource carrying the EPDCCH; and

determine the position information of the physical resource carrying the EPDCCH according to the configuration information that is of the position of the physical resource carrying the EPDCCH and carried in the second random access response.

**57.** The user equipment according to any one of claims 49 to 53, wherein the processor is configured to:

receive an RRC reconfiguration instruction, wherein the reconfiguration instruction carries configuration information of a position of the physical resource carrying the EPDCCH, and the configuration information indicates the position of the physical resource carrying the EPDCCH; and

determine the position information of the physical resource carrying the EPDCCH according to the configuration information that is of the position of the physical resource carrying the EPDCCH and carried in the received RRC reconfiguration instruction.

**58.** A communications system, comprising:

a base station and at least one user equipment, wherein:

the base station is configured to determine position information of a physical resource carrying a physical downlink control channel EPDCCH which is sent to the user equipment, and send the EPDCCH to the user equipment according to the determined position information of the physical resource carrying the EPDCCH; and

the user equipment is configured to determine the position information of the physical resource carrying the EPDCCH which is sent by the base station, and receive the EPDCCH according to the determined position information of the physical resource carrying the EPDCCH.

**59.** The communications system according to claim 58, wherein:

the position information of the physical resource carrying the EPDCCH comprises a position of a start physical resource block (RB) pair of the physical resource carrying the EPDCCH; and

the base station and the user equipment determine the position of the start physical RB pair of the physical resource carrying the EPDCCH according to pre-setting; or

the base station and the user equipment determine the position of the start physical RB pair of the physical resource carrying the EPDCCH according to a physical-layer cell identity; or

the base station and the user equipment determine the position of the start physical RB pair of the physical resource carrying the EPDCCH according to a physical-layer cell identity and time information.

**60.** The communications system according to claim 58, wherein:

the base station and the user equipment determine the position information of the physical resource carrying the EPDCCH according to a physical random access channel PRACH used by the user equipment to initiate uplink random access;

or,

the base station and the user equipment determine the position information of the physical resource carrying the EPDCCH according to a user identifier of the user equipment;

or,

the base station and the user equipment determine the position information of the physical resource carrying the EPDCCH according to a random access channel RACH sequence used by the user equipment to initiate uplink random access.

**61.** The communications system according to any one of claims 58 to 60, wherein:

when the base station and the user equipment determine the position information of the physical resource carrying the EPDCCH, the base station and the user equipment first determine start position information of the physical resource carrying the EPDCCH, and then determine the position information of the physical resource carrying the EPDCCH according to a preset resource frequency hopping mode and the determined start position information.

62. The communications system according to any one of claims 58 to 61, wherein:

the base station sends, through a public physical channel, configuration information of a physical resource position of the EPDCCH to the user equipment, wherein the configuration information indicates a position of the physical resource carrying the EPDCCH or a manner of determining the position of the physical resource carrying the EPDCCH; and
the user equipment receives the public physical channel, and determines the position information of the physical resource carrying the EPDCCH according to the configuration information that is of the physical resource position of the EPDCCH and carried in the public physical channel.

63. The communications system according to any one of claims 58 to 61, wherein:

the user equipment sends a first random access request to the base station;
the base station receives the first random access request, and sends a first random access response to the user equipment according to the first random access request, wherein the first random access response carries configuration information of a position of the physical resource carrying the EPDCCH, and the configuration information indicates the position of the physical resource carrying the EPDCCH; and
the user equipment receives the first random access response, and determines the position information of the physical resource carrying the EPDCCH according to the configuration information that is of the position of the physical resource carrying the EPDCCH and carried in the first random access response.

64. The communications system according to any one of claims 58 to 61, wherein:

the user equipment sends a first random access request to the base station;
the base station receives the first random access request, and sends a first random access response to the user equipment according to the first random access request;
the user equipment sends a second random access request according to the first random access response;
the base station receives the second random access request, and sends a second random access response to the user equipment according to the second random access request, wherein the second random access response carries configuration information of a position of the physical resource carrying the EPDCCH, and the configuration information indicates the position of the physical resource carrying the EPDCCH; and
the user equipment receives the second random access response, and determines the position information of the physical resource carrying the EPDCCH according to the configuration information that is of the position of the physical resource carrying the EPDCCH and carried in the second random access response.

65. The communications system according to any one of claims 58 to 61, wherein:

the base station sends a radio resource control (RRC) reconfiguration instruction to the user equipment, wherein the reconfiguration instruction carries configuration information of a position of the physical resource carrying the EPDCCH, and the configuration information indicates the position of the physical resource carrying the EPDCCH; and
the user equipment receives the RRC reconfiguration instruction, and determines the position information of the physical resource carrying the EPDCCH according to the configuration information that is of the position of the physical resource carrying the EPDCCH and carried in the RRC reconfiguration instruction.

Step 11: Determine position information of physical resources carrying an EPDCCH

Step 12: Send the EPDCCH according to the determined position information of the physical resources carrying the EPDCCH

FIG. 1

Distribution in a continuous manner

FIG. 2

EP 3 013 010 A1

Distribution in a distributed manner

FIG. 3

FIG. 4

48

FIG. 5

FIG. 6

FIG. 7

UE                    Base station

Msg1

Msg2

Msg3

Msg4

FIG. 8

Msg2

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| Temporary C-RNTI | | Oct 5 |
| Temporary C-RNTI | | Oct 6 |
| EPDCCH configuration information | | Oct 7 |
| EPDCCH configuration information | | Oct 8 |

FIG. 9

Step 21: Determine position information of physical resources carrying an EPDCCH

Step 22: Receive the EPDCCH according to the determined position information of the physical resources carrying the EPDCCH

FIG. 10

1

```
Base station

  Determining unit        ⌒100

  Sending unit            ⌒101
```

FIG. 11

1

```
Base station

  Receiving unit    Determining unit    ⌒100

                    Sending unit         ⌒101

  ⌒102
```

FIG. 12

2

UE

| Determining unit | 200 |

| Receiving unit | 201 |

FIG. 13

2

UE

Sending unit

| Determining unit | 200 |

| Receiving unit | 201 |

202

FIG. 14

3

| | 31 | 32 | Memory |
| Processor | | | |

Bus
34

Communication
interface · 33

FIG. 15

4

| | 41 | 42 | Memory |
| Processor | | | |

Bus
44

Communication
interface · 43

FIG. 16

FIG. 17

# INTERNATIONAL SEARCH REPORT

| International application No. |
| --- |
| PCT/CN2013/079927 |

## A. CLASSIFICATION OF SUBJECT MATTER

H04L 27/26 (2006.01) i

According to International Patent Classification (IPC) or to both national classification and IPC

## B. FIELDS SEARCHED

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

CNTXT, CNKI, DWPI: EPDCCH, resource, locat+

## C. DOCUMENTS CONSIDERED TO BE RELEVANT

| Category* | Citation of document, with indication, where appropriate, of the relevant passages | Relevant to claim No. |
| --- | --- | --- |
| X | CN 102368759 A (ZTE CORP.), 07 March 2012 (07.03.2012), description, pages 2-5 | 1-65 |
| A | CN 102316595 A (ZTE CORP.), 11 January 2012 (11.01.2012), the whole document | 1-65 |
| A | CN 102291785 A (ACADEMY OF TELECOMMUNICATION TECHNOLOGY), 21 December 2011 (21.12.2011), the whole document | 1-65 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 11 March 2014 (11.03.2014) | 27 March 2014 (27.03.2014) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer YANG, Jibin Telephone No.: (86-10) 62413559 |
| --- | --- |

Form PCT/ISA/210 (second sheet) (July 2009)

## INTERNATIONAL SEARCH REPORT
Information on patent family members

| International application No. |
| --- |
| **PCT/CN2013/079927** |

| Patent Documents referred in the Report | Publication Date | Patent Family | Publication Date |
| --- | --- | --- | --- |
| CN 102368759 A | 07.03.2012 | WO 2013064088 A1 | 10.05.2013 |
| CN 102316595 A | 11.01.2012 | WO 2012152113 A1 | 15.11.2012 |
| CN 102291785 A | 21.12.2011 | WO 2013040951 A1 | 28.03.2013 |

Form PCT/ISA/210 (patent family annex) (July 2009)